# EUROPEAN PATENT APPLICATION

(11) **EP 4 597 961 A1**
(43) Date of publication of application: **06.08.2025**
(21) Application number: 22961041.5
(22) Date of filing: 30.09.2022
(51) Int. Cl.: H04L 27/26

(54) **TERMINAL, BASE STATION, AND COMMUNICATION METHOD**

(71) Applicant: NTT DOCOMO, INC., Tokyo 100-6150 (JP)
(72) Inventor: HARADA Hiroki, Tokyo 100-6150 (JP); NAKAMURA Takuma, Tokyo 100-6150 (JP); OKAWA Riki, Tokyo 100-6150 (JP)
(74) Representative: Hoffmann Eitle
(86) International application number: PCT/JP2022/036861
(87) International publication number: WO 2024/069982

(57) **Abstract**

A terminal includes a transmitting unit that performs uplink transmission using N (where N is a natural number equal to or less than M) bands selected from among M (where M is a natural number equal to or greater than 3) bands, and a control unit that, in a case where an instruction for transmission at one port is given and candidates of two or more band combinations are assumed, determines a band combination from among the two or more band combinations on the basis of a specific rule.

## Description

### TECHNICAL FIELD

The present invention relates to a terminal, a base station, and a communication method in a radio communication system.

### BACKGROUND ART

In new radio (NR) (also referred to as "5G"), which is a succeeding system to long term evolution (LTE), a technology that satisfies being a large-capacity system, having a high-speed data transmission speed and a low delay, allowing simultaneous connection of a large number of terminals, having a low cost, allowing power saving, and the like as requirement conditions has been studied (for example, Non Patent Literature 1).

In Release 18 of the 3GPP, it is possible to set three or four bands as bands that can be used in UL transmission, and a mechanism for supporting simultaneous transmission using up to two bands (UL Tx switching schemes across up to 3 or 4 bands with restriction of up to 2 Tx simultaneous) has been studied (for example, Non Patent Literature 1).

### PRIOR ART DOCUMENT

### NON-PATENT DOCUMENT

Non Patent Document 1: "New WID on Multi-carrier enhancements", RP-213577, 3GPP TSG RAN Meeting #94e, 3GPP, December 2021

### SUMMARY OF THE INVENTION

Incidentally, in a case where the number of bands that can be used in UL transmission is two, when an instruction for transmission at one port in one band is given, a problem (ambiguous state issue) in which there are two band combination candidates is assumed. In order to solve such a problem, a parameter (uplinkTxSwitching-DualUL-TxState) that specifies whether 1Tx is assumed for each band or 2Tx is assumed for a band in which transmission is performed is introduced.

However, when the number of bands that can be used in the UL transmission increases to three or four, the number of combinations of bands used in the UL transmission also increases. Therefore, even if the above parameter (uplinkTxSwitching-DualUL-TxState) is used, a problem (ambiguous state issue) in which there are still two or more band combination candidates is assumed.

Therefore, the present disclosure has been made to solve the above problems, and an object thereof is to provide a terminal, a base station, and a communication method capable of appropriately executing UL Tx switching schemes while avoiding a situation in which there are two or more band combination candidates.

According to an aspect of the disclosure, there is provided a terminal including a transmitting unit that performs uplink transmission using N (where N is a natural number equal to or less than M) bands selected from among M (where M is a natural number equal to or greater than 3) bands; and a control unit that, in a case where an instruction for transmission at one port is given and candidates of two or more band combinations are assumed, determines a band combination from among the two or more band combinations on a basis of a specific rule.

According to another aspect of the disclosure, there is provided a base station including a receiving unit that performs uplink reception using N (where N is a natural number equal to or less than M) bands selected from among M (where M is a natural number equal to or greater than 3) bands; and a control unit that, in a case where an instruction for transmission at one port is given and candidates of two or more band combinations are assumed, assumes that a terminal determines a band combination from among the two or more band combinations on a basis of a specific rule.

According to still another aspect of the disclosure, there is provided a communication method including a step of performing uplink transmission using N (where N is a natural number equal to or less than M) bands selected from among M (where M is a natural number equal to or greater than 3) bands; and a step of, in a case where an instruction for transmission at one port is given and candidates of two or more band combinations are assumed, determining a band combination from among the two or more band combinations on a basis of a specific rule.

### BRIEF DESCRIPTION OF DRAWINGS

[Fig. 1] It is a diagram for describing a radio communication system according to an embodiment of the present invention.
[Fig. 2] It is a diagram for describing a radio communication system according to the embodiment of the present invention.
[Fig. 3] It is a diagram illustrating Case 1 and Case 2 in UL Tx switching.
[Fig. 4] It is a diagram illustrating a configuration example of an antenna port used for transmission for each case in UL Tx switching.
[Fig. 5] It is a diagram illustrating a configuration example of an antenna port used for transmission for each case in UL Tx switching.
[Fig. 6] It is a diagram illustrating an example of a UE capability.
[Fig. 7] It is a diagram illustrating an example of an RRC configuration.
[Fig. 8] It is a diagram illustrating an example of a switching period.
[Fig. 9] It is a diagram illustrating an example of a switching period.
[Fig. 10] It is a diagram illustrating an example of a length of Dl interruption.
[Fig. 11] It is a diagram illustrating Cases 1 to 3 in UL Tx switching.
[Fig. 12] It is a diagram illustrating a configuration example of an antenna port used for transmission for each case in UL Tx switching.
[Fig. 13] It is a diagram illustrating an example of an RRC configuration.
[Fig. 14] It is a diagram illustrating an example of a case where a plurality of carriers are included in a single band in UL Tx switching.
[Fig. 15] It is a diagram illustrating a configuration example of an antenna port used for transmission for each case in UL Tx switching.
[Fig. 16] It is a diagram illustrating a configuration example of an antenna port used for transmission for each case in UL Tx switching.
[Fig. 17] It is a diagram illustrating a configuration example in a case where switching is performed across four bands.
[Fig. 18] It is a diagram illustrating a configuration example of an antenna port used for transmission in a case where switching is performed across four bands.
[Fig. 19] It is a diagram illustrating a basic operation example of the embodiment.
[Fig. 20] It is a diagram illustrating a configuration example of a base station 10.
[Fig. 21] It is a diagram illustrating a configuration example of a terminal 20.
[Fig. 22] It is a diagram illustrating an example of a hardware configuration of the base station 10 or the terminal 20 according to the embodiment of the present invention.
[Fig. 23] It is a diagram illustrating a configuration example of a vehicle.

### MODES FOR CARRYING OUT THE INVENTION

Hereinafter, embodiments of the present invention will be described with reference to the drawings. Note that the embodiments described below are examples, and an embodiment to which the present invention is applied is not limited to the following embodiments.

An existing technology is used as appropriate for an operation of a radio communication system of the embodiment of the present invention. However, the existing technology is, for example, existing LTE or existing NR, but is not limited to existing LTE or NR.

In the embodiments of the present invention described below, terms such as a synchronization signal (SS), a primary SS (PSS), a secondary SS (SSS), a physical broadcast channel (PBCH), a physical random access channel (PRACH), a physical downlink control channel (PDCCH), a physical downlink shared channel (PDSCH), a physical uplink control channel (PUCCH), and a physical uplink shared channel (PUSCH) used in existing LTE or NR will be used. This is for convenience of description, and similar signals, functions, and the like may be referred to by other names. The above-described terms in NR correspond to an NR-SS, an NR-PSS, an NR-SSS, an NR-PBCH, an NR-PRACH, and the like. However, even a signal used for NR is not necessarily specified as "NR-".

In the embodiment of the present invention, a duplex method may be a time division duplex (TDD) method, a frequency division duplex (FDD) method, or other (for example, a flexible duplex) methods.

In the embodiment of the present invention, a radio parameter and the like being "configured" may indicate that a predetermined value is pre-configured, or that a radio parameter reported from a base station 10 or a terminal 20 is configured.

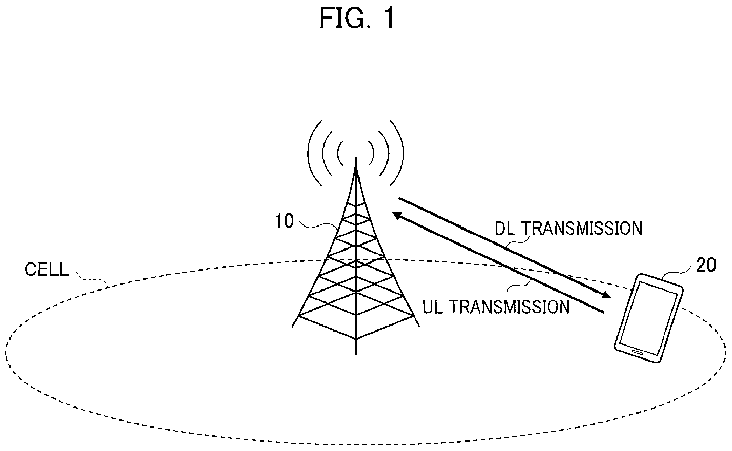

Fig. 1 is a diagram illustrating a configuration example (1) of a radio communication system according to an embodiment of the present invention. As illustrated in Fig. 1, the radio communication system in the embodiment of the present invention includes a base station 10 and a terminal 20. Although one base station 10 and one terminal 20 are illustrated in Fig. 1, this is an example, and a plurality of base stations 10 and a plurality of terminals 20 may be provided.

The base station 10 is a communication apparatus that provides one or more cells and performs radio communication with the terminal 20. Physical resources of radio signals are defined in a time domain and a frequency domain, and the time domain may be defined by the number of orthogonal frequency division multiplexing (OFDM) symbols, and the frequency domain may be defined by the number of subcarriers or the number of resource blocks. The base station 10 transmits a synchronization signal and system information to the terminal 20. The synchronization signal is, for example, an NR-PSS and an NRSSS. The system information is transmitted through, for example, an NR-PBCH and will also be referred to as broadcast information. The synchronization signal and the system information may be referred to as an SSB (SS/PBCH block). As illustrated in Fig. 1, the base station 10 transmits a control signal or data to the terminal 20 via a downlink (DL) and receives a control signal or data from the terminal 20 via an uplink (UL). Both the base station 10 and the terminal 20 can transmit and receive signals by performing beamforming. Both the base station 10 and the terminal 20 can apply communication based on multiple input multiple output (MIMO) to a DL or a UL. Both the base station 10 and the terminal 20 may perform communication via a secondary cell (SCell) and a primary cell (PCell) by using carrier aggregation (CA). The terminal 20 may perform communication via a primary cell of the base station 10 and a primary secondary cell group cell (PSCell: Primary SCG Cell) of another base station 10 by using dual connectivity (DC).

The terminal 20 is a communication apparatus having a radio communication function, such as a smartphone, a mobile phone, a tablet terminal, a wearable terminal, or a machine-to-machine (M2M) communication module. As illustrated in Fig. 1, the terminal 20 uses various communication services provided by the radio communication system by receiving a control signal or data from the base station 10 via a DL and transmitting a control signal or data to the base station 10 via a UL. The terminal 20 receives various reference signals transmitted from the base station 10 and measures the propagation path quality on the basis of reception results of the reference signals.

The terminal 20 can perform carrier aggregation for bundling a plurality of cells (a plurality of component carriers (CCs)) and performing communication with the base station 10. In carrier aggregation, one primary cell (PCell) and one or more secondary cells (SCells) are used. A PUCCH SCell having a PUCCH may be used.

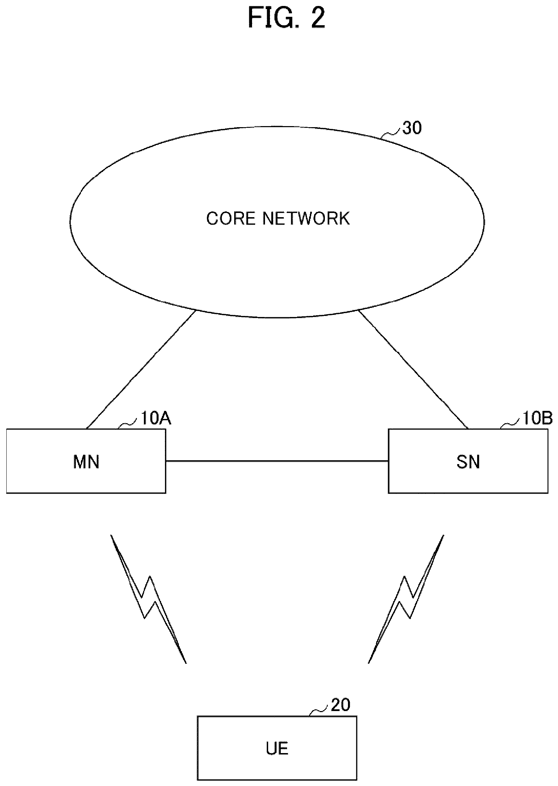

Fig. 2 is a diagram for describing an example (2) of a radio communication system according to the embodiment of the present invention. Fig. 2 illustrates a configuration example of a radio communication system in a case where dual connectivity (DC) is executed. As illustrated in Fig. 2, a base station 10A serving as a master node (MN) and a base station 10B serving as a secondary node (SN) are provided. Each of the base station 10A and the base station 10B is connected to a core network. The terminal 20 can communicate with both the base station 10A and the base station 10B.

A cell group provided by the base station 10A which is an MN will be referred to as a master cell group (MCG), and a cell group provided by the base station 10B which is an SN will be referred to as a secondary cell group (SCG). In the DC, the MCG includes one PCell and one or more SCells, and the SCG includes one primary SCG cell (PSCell) and one or more SCells.

A processing operation in the present embodiment may be executed in the system configuration illustrated in Fig. 1, may be executed in the system configuration illustrated in Fig. 2, or may be executed in a system configuration other than these.

In 3GPP, enhancement of operation in multicarrier has been studied. Specifically, an operation in which a terminal simultaneously supporting up to two transmissions in Frequency Range 1 (FR1) dynamically switches a band for transmitting a UL over three or four bands has been studied. In the following description, "carrier", "CC", and "cell" may be used synonymously.

### (Problem)

In the related art (Rel-16, Rel-17), the terminal 20 supports the UL Tx switching function (uplink transmission switching function) which is a function of switching UL transmission between two bands (two carriers). By using the UL Tx switching function, even the terminal 20 having only two transmission chains (Tx Chains) can switch between an operation of performing transmission on one carrier by using two antenna ports and an operation of performing transmission on one carrier by using one antenna port and on another carrier by using another antenna port in units of time.

Note that the transmission chain (Tx Chain) is a physical function for transmission in the terminal 20 regardless of whether or not actual transmission is performed. Transmission on one carrier can be performed with one transmission chain. By switching carriers (transmission function units corresponding to the carriers) used by a transmission chain, it is possible to switch the carriers that can be transmitted by the transmission chain.

The antenna port is an antenna that can actually perform transmission by using a transmission chain (Tx Chain) . The transmission chain and the antenna port may be used synonymously. The "antenna port" may be referred to as a "port".

In the following description, one band has one carrier unless otherwise specified. Therefore, in the present specification and claims, "band" may be replaced with "carrier", or "carrier" may be replaced with "band". However, it is an example that one band has one carrier, and one band may have a plurality of carriers. When there are a plurality of carriers in one band, the number or a relationship thereof may be limited, and for example, there may be a limitation of up to two consecutive carriers on a frequency. A plurality of carriers in one band may be treated similarly to one UL band (carrier) in the following description.

In 3GPP, "UL Tx switching schemes across up to 3 or 4 bands with restriction of up to 2 Tx simultaneous transmission for FR1 UEs" (a function in which a terminal supporting up to two transmissions at the same time in FR1 dynamically switches a band for transmitting a UL over three or four bands) has been studied. For convenience, this function may be referred to as "Rel-18 UL Tx switching".

The above function is a function of configuring three or four UL bands (carriers) for a terminal that cannot perform UL carrier aggregation (CA) or can perform only up to 2 UL CA if possible, and enabling the base station 10 to dynamically give an instruction for transmission in one or two UL bands (carriers) from among them.

With such a function, it is possible to instruct the terminal 20 to perform the UL transmission using a UL band (carrier) suitable for use in each time resource in consideration of a traffic situation or a TDD configuration among a plurality of UL bands (carriers). As a result, a frequency utilization efficiency and a UL throughput are improved.

In Rel-16 and Rel-17, UL Tx switching between two bands is specified. However, in Rel-18 UL Tx switching, how to configure a UL band (carrier) as a switching candidate in the terminal 20 is not clear.

Conventionally, in the terminal 20 supporting UL CA, a plurality of DL/UL carriers are configured as serving cells with the number of CCs of the UL CA supported by the terminal 20 or less, and an instruction for a UL CC dynamically used for transmission can be given. However, in Rel-18 UL Tx switching, it is necessary to configure a larger number of UL carriers than the number of CCs of the UL CA supported by the UL CA. However, in the related art, it is not assumed that the number of UL CCs equal to or larger than the number of supported CCs is configured.

As another existing technology, there is a supplemental uplink (SUL). The SUL framework supports association with a normal uplink (NUL) and dynamic switching, but it is not assumed to extend the SUL framework.

Hereinafter, UL Tx switching of each of Rel-16 and R-17 will be first described. Subsequently, capability and configuration information proposed for Rel-18 UL Tx switching will be described. However, the content of the capability and the configuration information defined for UL Tx switching of Rel-16 and R-17 may be applied to Rel-18 UL Tx switching.

Operations related to power boosting, a switching period, DL interruption, and the like, which will be described for UL Tx switching of Rel-16 and R-17, are basically the same as those of Rel-16 and R-17 in Rel-18 UL Tx switching.

### (UL Tx switching of Rel-16)

In Rel-16, the terminal 20 corresponds to two carriers and has two transmission chains. One transmission chain is fixed to one carrier, but the other transmission chain may be associated with one carrier of the two carriers by a switch. Thus, for example, it is possible to perform simultaneous transmission by using two antenna ports on one carrier. Each antenna port can also perform transmission on one carrier and one antenna port. These schemes can be dynamically switched. UL Tx switching of Rel-16 is referred to as Rel-16 1Tx-2Tx switching.

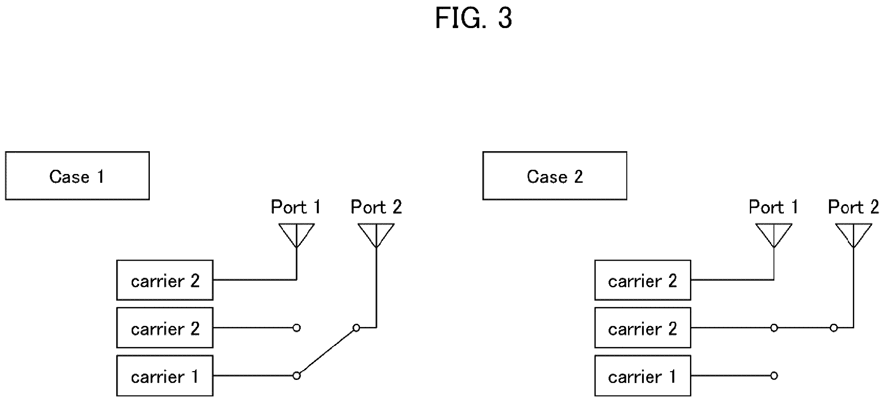

As illustrated in Fig. 3, a configuration in which each transmission chain is associated with one carrier will be referred to as Case 1, and a configuration in which two transmission chains are associated with one carrier will be referred to as Case 2.

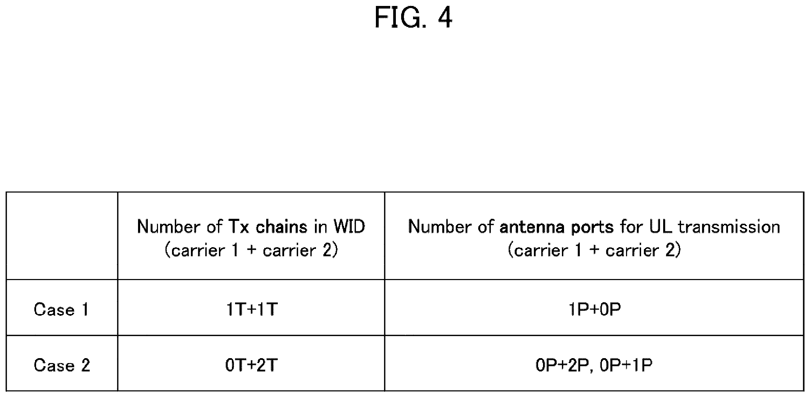

Fig. 4 illustrates a configuration of a transmission chain used for transmission in each of Case 1 and Case 2 in the SUL. For example, 1T+1T which is Case 1 indicates that a carrier 2 is connected to a transmission chain 1 and a carrier 1 is connected to a transmission chain 2 in the example in Fig. 3.

1P+0P in the state of 1T+1T indicates that transmission using the carrier 1 is performed in an antenna port 2 but is not performed in an antenna port 1. In the SUL, since two carriers cannot be configured at the same time, there is no 1P+1P. In the SUL, transmission of only the NUL (carrier 2) is not assumed in Case 1, and thus, 0P+1P does not exist.

"0P+2P, 0P+1P" in Case 2 indicates that transmission using the carrier 2 is performed in the antenna port 1 and the antenna port 2, or transmission using the carrier 2 is performed only in the antenna port 1.

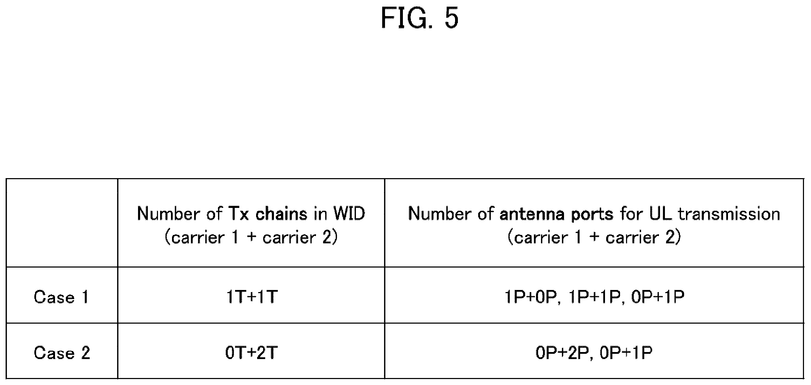

For Rel-16 1Tx-2Tx switching in the inter-band CA/EN-DC, there are Option 1 in which two carriers cannot be used simultaneously and Option 2 in which two carriers can be used simultaneously. A transmission chain configuration used for transmission in Option 1 is the same as that illustrated in Fig. 4. A transmission chain configuration used for transmission in Option 2 is as illustrated in Fig. 5.

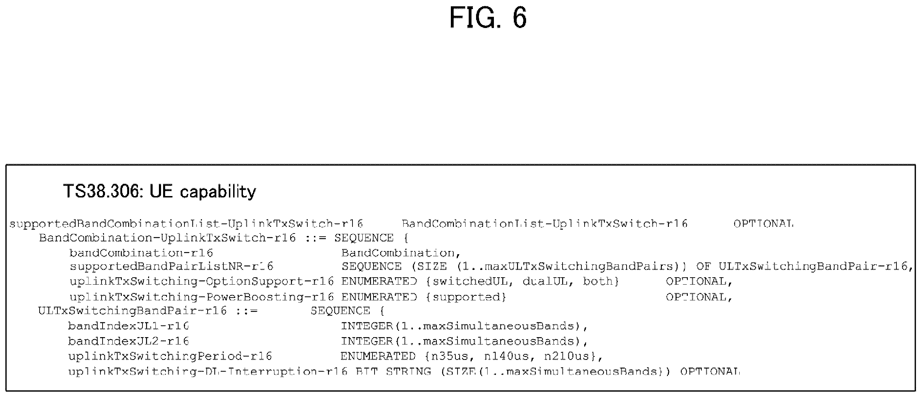

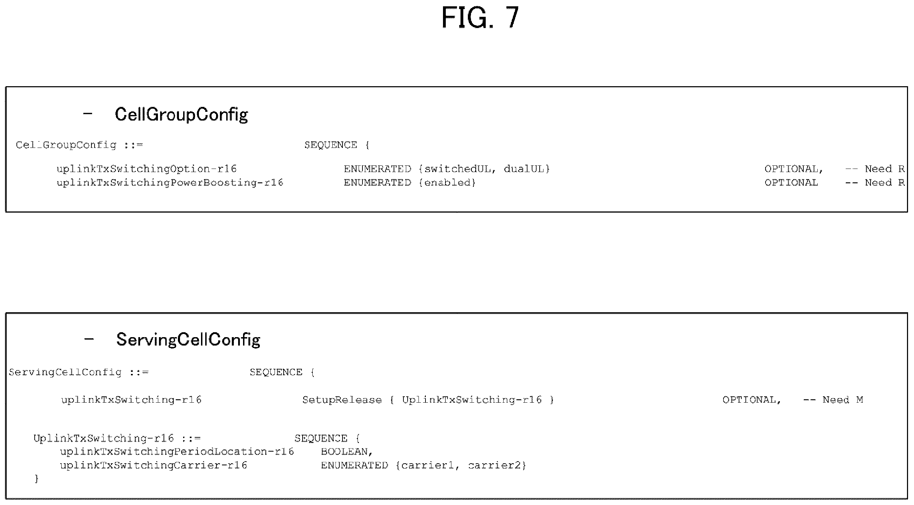

Fig. 6 illustrates an example of UE capability that is defined corresponding to Rel-16 1Tx-2Tx switching and is reported from the terminal 20 to the base station 10. Fig. 7 illustrates an example of CellGroupConfig and ServingCellConfig defined for Rel-16 1Tx-2Tx switching and configured in the terminal 20 from the base station 10.

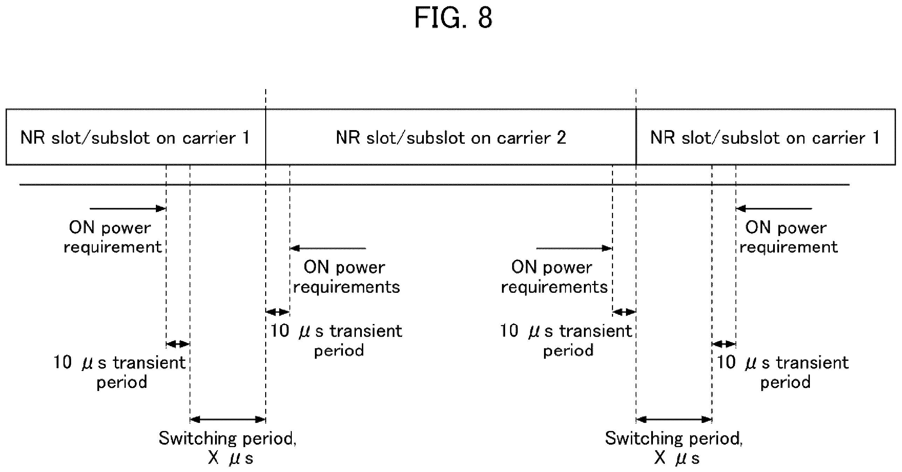

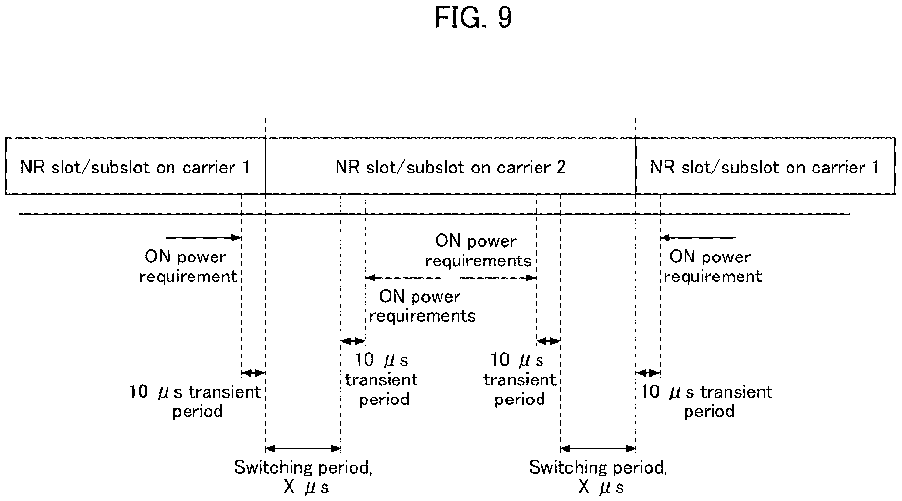

uplinkTxSwitchingPeriodLocation-r16 in ServingCellConfig indicates whether or not a UL Tx switching period is configured in a target cell (carrier). An operation example related to the UL Tx switching period is illustrated in Figs. 8 and 9. Fig. 8 illustrates an example of a case where it is configured that the UL Tx switching period occurs in the carrier 1. In this case, the UL Tx switching period occurs in the carrier 1 in both the case of switching from the carrier 1 to the carrier 2 and the case of switching from the carrier 2 to the carrier 1. For example, in the case in Fig. 8, when an instruction to switch to the carrier 2 is received during transmission on the carrier 1, transmission on the carrier 2 is performed after a switching time (switching period) on the carrier 1. Fig. 9 is an example of a case where it is configured that the UL Txswitching period occurs in the carrier 2.

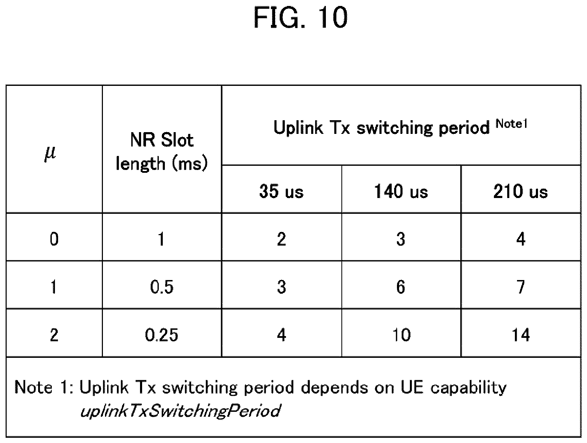

When performing dynamic switching between two carriers, the terminal 20 is allowed to perform DL interruption with a predetermined length for a portion overlapping a UL switching period in a DL carrier. Such a length (X OFDM symbols) is defined as illustrated in Fig. 10.

The UL Tx switching of Rel-16 is summarized as follows. On the basis of PUSCH scheduling (scheduling command, rank adaptation) from the base station 10, the terminal 20 can dynamically switch between "1-port transmission on the carrier 1", "1-port transmission on the carrier 2", "1-port transmission on the carrier 1 + 1-port transmission on the carrier 2" (applicable only when Option 2 is supported in inter-band CA), and "2-port transmission on the carrier 2 (with or without 3dB power boosting)".

A switching period occurs when a carrier connected to the transmission port is switched, and UL transmission is not performed on either carrier during the switching period. There is also a case where DL interruption occurs during the switching period.

### <Rel-17>

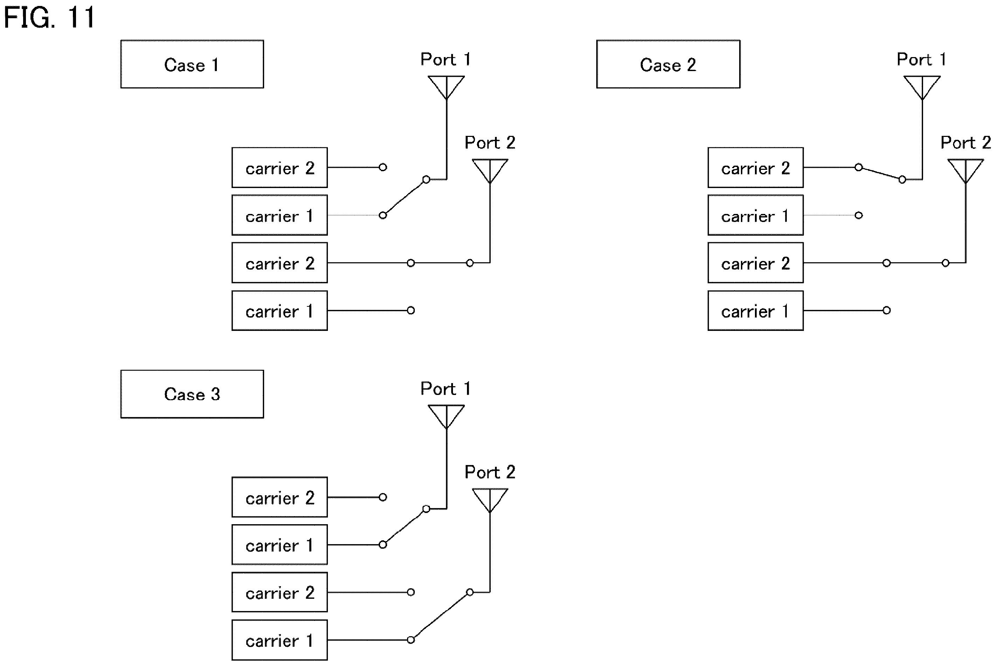

Next, Rel-17 will be described. In Re1-17, since two transmission chains can respectively correspond to two carriers, 2Tx-2Tx UL Tx switching is performed. Since 2-port transmission can also be performed on the carrier 1, compared with Rel-16, Case 3 is added in addition to Case 1 and Case 2 as a case of a connection pattern between a transmission chain and a carrier as illustrated in Fig. 11. Therefore, the terminal 20 and the base station 10 need to distinguish between Rel-17 (2Tx-2Tx UL Tx switching) and Rel-16 (1Tx-2Tx).

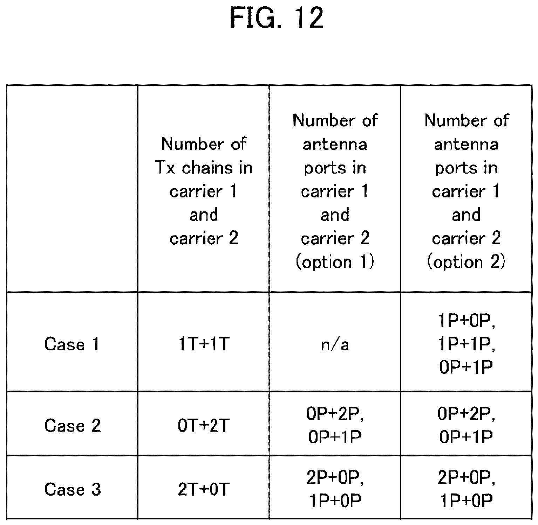

In Rel-17 (2Tx-2Tx UL Tx switching), a pattern of the number of transmission ports in each case is as illustrated in Fig. 12. Fig. 12 illustrates a pattern of the number of transmission ports for each case and each option (whether or not simultaneous transmission of two carriers can be performed).

Here, for example, in a case where an instruction for 1P+0P is given to the terminal 20 that performs UL CA option 2 in the state of Case 2, or in a case where an instruction for 0P+1P is given in the state of Case 3, the terminal 20 needs to determine which of the remaining two cases to switch to.

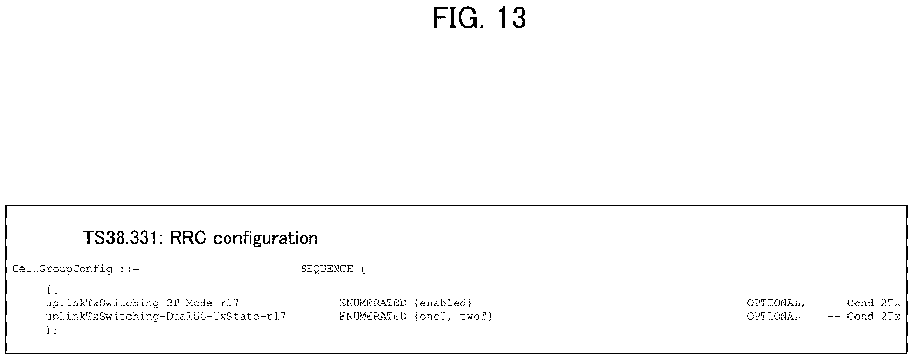

Fig. 13 illustrates an example of an RRC configuration in Rel-17. In Fig. 13, uplinkTxSwitching-2T-Mode-r17 indicates a configuration of a mode of 2Tx-2Tx UL Tx switching, and uplinkTxSwitching-DualUL-TxState-r17 is information for configuring which case to switch to when there are a plurality of candidates for which case to switch to at the time of switching, as described above.

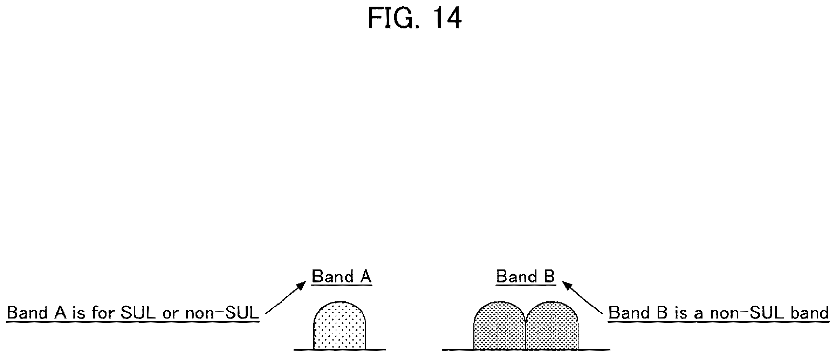

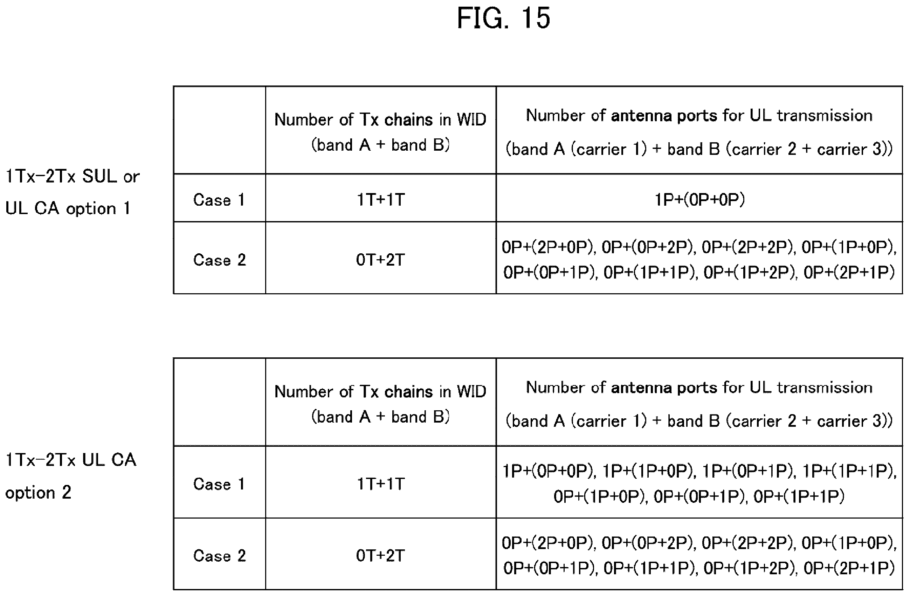

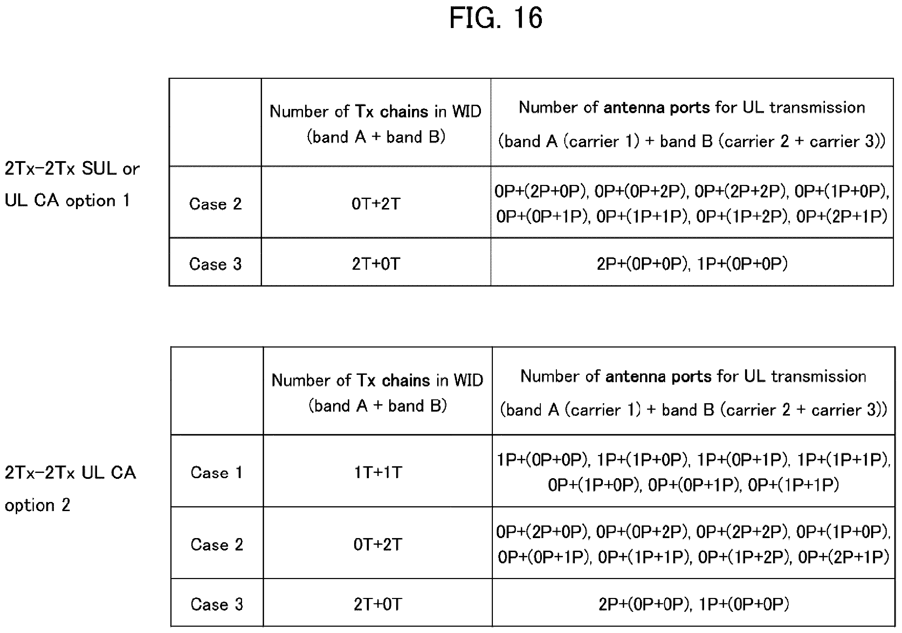

In the UL Tx switching of Rel-17, as illustrated in Fig. 14, the number of bands is two, but it is supported to use two consecutive carriers in one of the bands. Figs. 15 and 16 illustrate configuration examples of the transmission port in each case in the example in Fig. 14.

The functions, configuration values, defined values, and the like of Rel-16 and R-17 described above may be applied to Rel-18 UL Tx switching.

### (Rel-18 UL Tx switching)

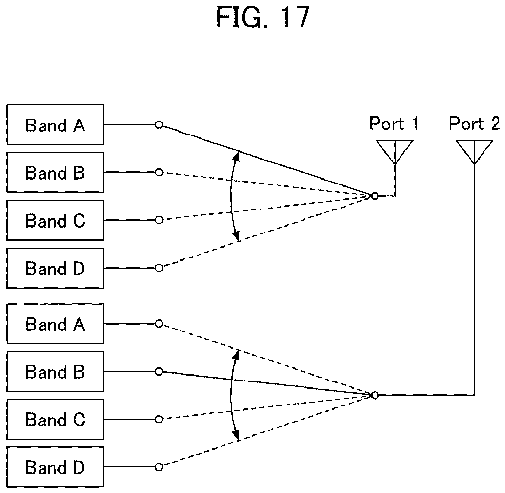

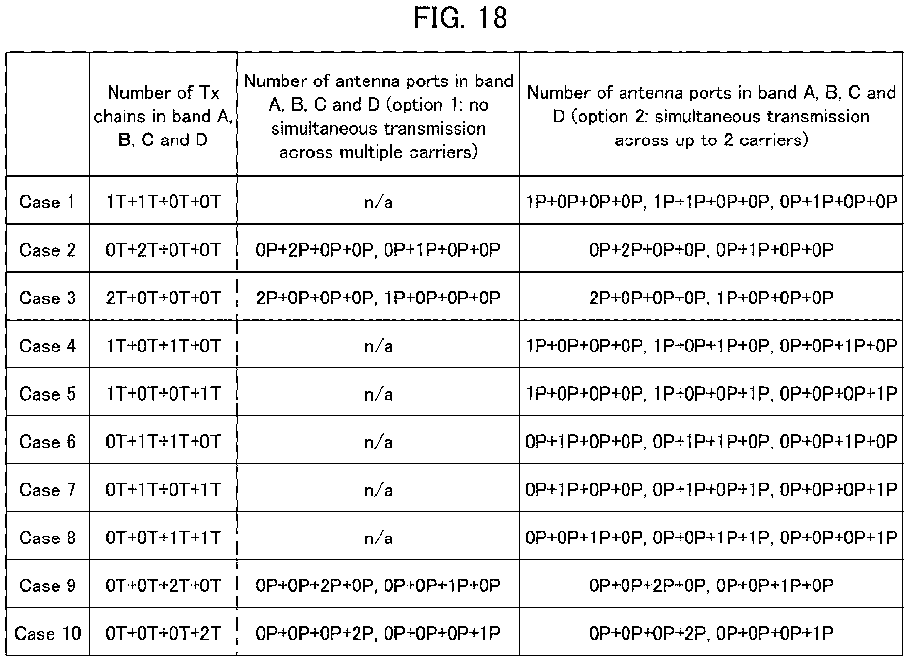

Figs. 17 and 18 illustrate a case assumed in Rel-18 UL Tx switching and a configuration of a port that performs transmission in each case. Here, as an example, bands that can be used for UL Tx switching are four bands A to B.

As illustrated in Fig. 17, there are two Tx Chains (two antenna ports), and each Tx Chain can be switched to one of the bands A to D. This is referred to as "2Tx-2Tx(-2Tx-2Tx) switching". Assuming that one carrier can be used in each band, as illustrated in Fig. 18, the number of cases is ten at the maximum (when the CA option 2 is assumed).

In addition to the above assumption, a case of 1Tx-2Tx(-1Tx-1Tx) switching in which a band (carrier) that can be used by one port is fixed is also conceivable.

As illustrated in Fig. 14, a case in which there are two consecutive carriers in some bands (a case in which there are five or more carriers in total) is also conceivable.

With respect to Rel-18 UL Tx switching in which the above assumption is made, there is no related art regarding the content of capability report from the terminal 20 to the base station 10 and a configuration/instruction from the base station 10 to the terminal 20, and thus, there is a possibility that "UL Tx switching schemes across up to 3 or 4 bands with restriction of up to 2 Tx simultaneous transmission" cannot be appropriately implemented in the related art.

Therefore, in the present embodiment, capability report and a configuration/instruction that enable appropriate implementation of the "UL Tx switching schemes across up to 3 or 4 bands with restriction of up to 2 Tx simultaneous transmission" will be described.

In the present embodiment, "UL Tx switching schemes across up to 3 or 4 bands with restriction of up to 2 Tx simultaneous transmission" is assumed, but this is an example. The maximum number of bands in a range in which transmission switching is performed may be larger than four. The number of antenna ports used for transmission may be larger than two. That is, there may be a case where simultaneous transmission occurs at three or more antenna ports.

### (Outline of Embodiment)

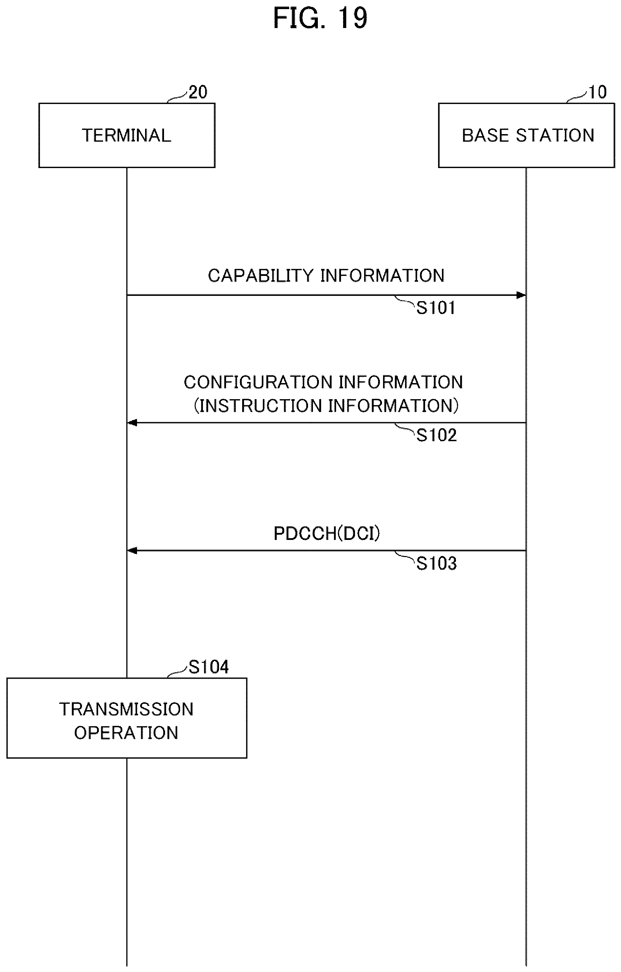

The present embodiment includes a first embodiment to a third embodiment. A basic operation example common to the first embodiment and the second embodiment will be described with reference to Fig. 19.

An example of capability information in which the terminal 20 transmits capability information (capability) to the base station 10 in S101 will be described in the first embodiment. In S102, the base station 10 transmits configuration information (or instruction information) to the terminal 20. An example of the configuration information/instruction information will be described in the second embodiment.

Note that the base station 10 determines configuration/instruction content for the terminal 20 within the range of the capability of the terminal 20 indicated in the capability information of the terminal 20 received in S101, creates configuration information/instruction information, and transmits the configuration information/instruction information in S102. However, such assumption is an example.

The terminal 20 that has received the configuration information/instruction information in S102 operates according to the information. In S103, when the terminal 20 receives DCI from the base station 10, the terminal 20 switches, for example, a band to which the port is to be connected on the basis of the DCI according to the configuration information, and performs transmission via the port after switching in S104.

The transmission of the configuration information/instruction information in S102 may be performed by using any of RRC signaling, MAC CE, and DCI. The outlines of the first embodiment and the second embodiment are as follows.

### <Outline of First Embodiment>

The terminal 20 reports, as a function supported by itself for the Rel-18 UL Tx switching, at least one of a plurality of pieces of capability information listed below to the base station 10 as capability information (capability). The following examples are all examples of capability information regarding a band.

·Supported UL Tx switching band combinations (e.g. up to three or four bands)
·The number of CCs supportable in each band
·Whether or not a DL carrier (downlink carrier) associated with each band is necessary
·{Whether or not simultaneous transmission is supported, a switching period, a band in which DL interruption occurs, whether or not power boosting is supported} for each combination of bands to be switched
·The number of band-switchable ports
·A target band of a port in which a band is fixed
·A switching candidate band of each port

### <Outline of Second Embodiment>

The terminal 20 receives at least one of a plurality of pieces of configuration information/instruction information listed below from the base station 10 as configuration information/instruction information for Rel-18 UL Tx switching. In other words, the base station 10 transmits at least one of a plurality of pieces of configuration information/instruction information listed below to the terminal 20. All of the examples listed below are examples of information regarding band switching.

·A DL/UL serving cell and a UL only serving cell (alternatively, either the DL/UL serving cell or the UL only serving cell) including a UL used for Rel-18 UL Tx switching
·Other serving cells in which an instruction for switching and/or simultaneous transmission may be given in each serving cell
·{Case interpretation in a case where an instruction for switching from a specific port configuration to another specific port configuration is given as to whether or not a switching period is included, whether power boosting may be performed, or whether simultaneous transmission may be performed} for each combination with another serving cell in each serving cell
·The number of ports that are band switching targets
·Whether or not each serving cell is associated with a port that is a band switching target (or non-switching target)

Hereinafter, each of the first embodiment and the second embodiment will be described in detail. Each of Examples 1 to 9 of the first embodiment can be implemented in combination with any of Examples 1 to 9 of the second embodiment.

### (First Embodiment)

In the first embodiment, the terminal 20 reports at least one of pieces of capability information described in the following Examples 1 to 9 to the base station. Information obtained by combining any two or more or all of Examples 1 to 9 may be reported.

### <Example 1>

The terminal 20 reports information regarding one or more band combinations (BC) for UL Tx switching supported for Rel-18 UL Tx switching to the base station 10 separately from a BC for UL CA.

The reported band combination (BC) for UL Tx switching may include a BC that is not compatible with UL CA. Each BC included in one or more band combinations (BC) for UL Tx switching may be information indicating a combination of bands that are switching targets.

For example, when the terminal 20 reports BC1, BC2, and BC3 as BCs for UL CA, the terminal 20 may report BC4 and BC5 as band combinations (BCs) for UL Tx switching.

As a variation, there may be a limitation that each BC included in one or a plurality of band combinations (BCs) for UL Tx switching to be reported needs to be a BC compatible with UL CA.

As another variation, when reporting a BC for UL Tx switching in Rel-18, there may be a limitation that it is necessary to report the capability defined in Rel-16/17 for each band combination in the BCs. In this case, for example, when a BC including bands A-B-C is reported in Rel-18, it is necessary to report the capability defined by Rel-16/17 for A-B, A-C, and B-C.

As still another variation, there may be a limitation that when reporting a BC for UL Tx switching in Rel-18, it is necessary to support each "band combination" in the BCs. In this case, for example, when a BC including the bands A-B-C is reported in Rel-18, it is necessary to support A-B, A-C, and B-C.

### <Example 2>

The terminal 20 reports, to the base station 10, information regarding the number of CCs supported in each band of the BC for UL Tx switching described in Example 1. The information regarding the number of CCs may be the number of CCs (the number of cells) itself. Note that a band (a band for which the number of CCs is reported) in Example 2 may be a band other than the band in the BC reported in Example 1.

An upper limit or a total bandwidth of the number of CCs that can be supported in each band in the Rel-18 UL Tx switching may be defined in the specification. For example, for each band, "up to two consecutive CCs", "consecutive CCs in the 100 MHz band", or the like may be defined as the number of CCs that can be supported by the terminal 20. An upper limit or a total bandwidth of the number of supportable CCs may be defined for each of TDD and FDD instead of each band. For example, the base station 10 configures a CC in a band for UL Tx switching for the terminal 20 according to these regulations.

### <Example 3>

In each band of a BC for UL Tx switching described in Example 1, the terminal 20 reports, to the base station 10, information regarding whether or not a DL carrier associated with the band is necessary. For example, in a case where there are a band_A, a band_B, and a band_C in a certain BC, information such as {the band_A: a DL carrier necessary, the band_B: a DL carrier unnecessary, and a band_C: a DL carrier unnecessary} is reported for the BC. Note that since the terminal 20 basically only needs to be able to perform DL reception on any carrier, it is possible to eliminate the need for a DL carrier in a certain band.

A condition for a UL carrier/band that does not require a DL carrier to be associated may be defined in the specification. Examples of the condition include TDD (or FDD), a specific band, and only a case where a specific band is included in a BC.

Note that the band in Example 3 (a band for which necessity of a DL carrier is reported) may be a band other than the band in the BC reported in Example 1.

### <Example 4>

The terminal 20 reports, to the base station 10, information regarding whether or not simultaneous transmission is supported for each combination of 16 bands to be switched in the BC for UL Tx switching described in Example 1.

For example, for a BC including bands A-B-C-D, the terminal 20 reports, to the base station 10, information indicating that the bands A-B can be simultaneously transmitted (dual UL or both) and each of the bands A-C and A-D cannot be simultaneously transmitted (switched UL).

The terminal 20 may report the information regarding whether or not simultaneous transmission is supported to the base station 10 for each band, for any combination in the BC, or for all BCs for Rel-18 UL Tx switching supported by the terminal 20 instead of each combination of bands to be switched.

Note that the band in Example 4 (the band for which whether or not simultaneous transmission is supported is reported) may be a band other than the band in the BC reported in Example 1.

### <Example 5>

The terminal 20 reports information regarding a switching period for each combination of bands to be switched in the BC for UL Tx switching described in the example 1. The information regarding the switching period may be a value of the switching period.

For example, for a BC including bands A-B-C-D, the terminal 20 reports, to the base station 10, information indicating a switching period of the bands A-B is n35 µs, a switching period of each of the bands A-C and A-D is n140 µs, and the like.

The terminal 20 may report the information regarding the switching period to the base station 10 for each band, for any combination in the BC, or for all BCs for Rel-18 UL Tx switching supported by the terminal 20 instead of each combination of bands to be switched.

New candidate values of the switching period may be defined for Rel-18 UL Tx switching, or some values that can be reported for Rel 16/17 need not be reported for Rel-18.

Note that the band in Example 5 (the band for which a switching period is reported) may be a band other than the band in the BC reported in Example 1.

### <Example 6>

The terminal 20 may report a band in which DL interruption occurs for each combination of bands to be switched in the BC for UL Tx switching described in Example 1.

For example, the terminal 20 reports, to the base station 10, 0100 in for the bands A-B, 1010 in the bands A-C, and the like in the BC including the bands A-B-C-D. This bitmap indicates the bands A-B-C-D, and means that DL interruption occurs at the time of switching in a band corresponding to the bit of 1.

The terminal 20 may report, to the base station 10, information regarding a band in which DL interruption occurs, for each band, for any combination in the BC, or for all BCs for Rel-18 UL Tx switching supported by the terminal 20 instead of each combination of bands to be switched.

Whether or not DL interruption is allowed for each band combination for Rel-18 UL Tx switching or for each combination of two bands in a band combination may be defined in the specification.

Note that the band in Example 6 (the band for which DL interruption is reported) may be a band other than the band in the BC reported in Example 1.

In Example 6, the base station 10 that has received the information indicating that DL interruption occurs in a certain band may perform scheduling assuming that DL interruption occurs, for example, when scheduling DL reception in the band.

### <Example 7>

The terminal 20 may report information regarding whether or not power boosting is supported for each combination of bands to be switched in the BC for UL Tx switching described in Example 1.

For example, the terminal 20 reports, to the base station 10, information indicating that power boosting is enabled in the bands A-B and that power boosting is disabled in the bands A-C and A-D in the BC including the bands A-B-C-D. Power boosting being possible in the bands A-B indicates, for example, that transmission power (output power) can be increased when the terminal 20 performs two-port transmission in one band as a result of switching the ports between the bands A-B. Alternatively, power boosting being possible in the bands A-B may indicate that transmission power (output power) can be increased when the bands A and B are simultaneously transmitted.

The terminal 20 may report, to the base station 10, the information regarding whether or not power boosting is supported, for each band, for any combination in the BC, or for all BCs for Rel-18 UL Tx switching supported by the terminal 20 instead of each combination of bands to be switched.

Note that the band in Example 7 (the band for which whether or not power boosting is enabled is reported) may be a band other than the band in the BC reported in Example 1.

Upon receiving the information indicating that power boosting in a certain band is enabled, the base station 10 may perform transmission power control with DCI or MAC CE on the terminal 20 so that power boosting is performed when performing scheduling for two-port simultaneous transmission in the band.

### <Example 8>

The terminal 20 may report, to the base station 10, information regarding the number of ports (for example, one or two) in which bands are switchable in the BC for UL Tx switching described in Example 1. When there is a port in which a band is fixed, a target band of the port in which the band is fixed may be reported. For example, the terminal 20 reports, to the base station 10, information indicating that the band A is fixed in the port 1 in the BC including the bands A-B-C-D.

In a case where there is a port in which a band is fixed, a predetermined number of layers (for example, two) may be reported as the number of MIMO layers for the target band, and a predetermined number of layers (for example, two) need not be reported as the number of MIMO layers for other bands.

Note that the band in Example 8 (the band for which the number of ports in which bands are switchable is reported) may be a band other than the band in the BC reported in Example 1.

### <Example 9>

The terminal 20 may report information regarding a switching candidate band in each port in the BC for UL Tx switching described in Example 1. For example, in the BC including the bands A-B-C-D, the terminal 20 reports, to the base station 10, information indicating that A and B are the switching candidates in the port 1 and A, B, C, and D are the switching candidates in the port 2.

The terminal 20 may report, to the base station 10, the number of corresponding ports in each band (examples: two in A, two in B, one in C, one in D) in the BC.

Note that the band (switching candidate band) in Example 9 may be a band other than the band in the BC reported in Example 1.

As described above, with the technology according to the first embodiment described with reference to Examples 1 to 9, the base station 10 can ascertain the capability of the terminal 20 related to UL Tx switching, and can thus perform configuration, instruction, or scheduling for appropriately performing the UL Tx switching.

### (Second Embodiment)

In a second embodiment, a terminal 20 receives a configuration of or an instruction for at least one of the following Examples 1 to 9 from a base station 10 according to any one of RRC signaling, MAC-CE, and DCI or a combination thereof. A configuration of or an instruction for a combination of any two or more or all of Examples 1 to 9 may be received from the base station 10 to the terminal 20.

### <Example 1>

In the terminal 20, a DL/UL serving cell (a cell having a UL carrier and a DL carrier) including a UL used for Rel-18 UL Tx switching or a UL only serving cell (a cell having only a UL carrier) including a UL used for Rel-18 UL Tx switching is configured from the base station 10. In the terminal 20, both the DL/UL serving cell including the UL used for the Rel-18 UL Tx switching and the UL only serving cell including the UL used for the Rel-18 UL Tx switching may be configured from the base station 10. Here, "configuring certain information" indicates that the terminal 20 receives the information from the base station 10.

The base station 10 can determine which cell to configure in the terminal 20 on the basis of the capability received from the terminal 20 in the first embodiment. For example, the base station 10 can configure a cell (carrier) included in the BC received in Example 1 of the first embodiment as a serving cell in the terminal 20.

For example, the base station 10 may configure a cell of an unnecessary band of a DL carrier as a UL only serving cell in the terminal 20 on the basis of the information received in Example 3 of the first embodiment.

A serving cell in the following Examples 2 to 9 is assumed to be a cell configured in the terminal 20 in Example 1. However, the present invention is not limited thereto, and the serving cell in the following Examples 2 to 9 may be a cell other than the cell configured in Example 1.

A configuration/instruction in the following Examples 2 to 9 may be performed at the time of configuring the cell in Example 1, or may be performed at a timing after the time of configuring the cell in Example 1.

### <Example 2>

The terminal 20 receives a specific IE/parameter from the base station 10 according to ServingCellConfig for a certain cell, so that the specific IE/parameter is configured in the terminal 20.

The terminal 20 may recognize that the cell includes a UL used for Rel-18 UL Tx switching according to the specific IE/parameter received from the base station 10. Note that ServingCellConfig is an example, and other messages or signals may be used.

### <Example 3>

A configuration of a specific IE/parameter according to ServingCellConfig for a certain cell from the base station 10 may allow the terminal 20 to recognize that the cell is a UL only serving cell used for Rel-18 UL Tx switching.

No configuration of a specific IE/parameter according to ServingCellConfig for a certain cell from the base station 10 may allow the terminal 20 to recognize that the cell is a UL only serving cell used for Rel-18 UL Tx switching.

Note that ServingCellConfig is an example, and other messages or signals may be used.

### <Example 4>

In the terminal 20, information regarding other serving cell(s) to which an instruction for switching and/or simultaneous transmission may be given in each serving cell is configured from the base station 10. For example, it is assumed that information regarding other serving cell(s) to which an instruction for switching/simultaneous transmission may be given is included in ServingCellConfig.

For example, it is assumed that, when the terminal 20 receives an RRC message (for example, ServingCellConfig) for a cell A and detects that there is a cell B in the RRC message as another serving cell to which an instruction for switching/simultaneous transmission may be given, an instruction for switching/simultaneous transmission between the cell A and the cell B may be given.

### <Example 5>

Information regarding whether or not a switching period is included for each combination between a certain serving cell and other serving cell(s) may be configured in the terminal 20 from the base station 10. Alternatively, information regarding whether or not a switching period is included in units of serving cells or units of cell groups instead of each combination with other serving cell(s) may be configured.

For example, it is assumed that information regarding whether or not a certain RRC message (examples: ServingCellConfig or CellGroupConfig) includes a switching period is included. For example, it is assumed that the terminal 20 receives an RRC message for the cell A and detects information indicating that "there is a switching period in the cell B in switching between the cell A and the cell B" in the RRC message. In this case, when receiving UL scheduling information in which switching occurs between the cell A and the cell B, the terminal 20 performs the switching in the switching period on the cell B side.

### <Example 6>

Information regarding whether the terminal 20 may perform power boosting is configured from the base station 10 for each combination between a certain serving cell and other serving cell(s). Alternatively, information regarding whether power boosting may be performed in units of serving cells or units of cell groups instead of each combination with other serving cell(s) may be configured.

For example, it is assumed that information regarding whether or not power boosting may be performed is included in a certain RRC message (examples: ServingCellConfig or CellGroupConfig). In this case, for example, it is assumed that the terminal 20 receives an RRC message and detects information indicating that "in switching between the cell A and the cell B, power boosting may be performed in a case where two-port simultaneous transmission is performed in the cell A" in the RRC message. In this case, the terminal 20 performs power boosting, for example, when UL scheduling information in which two-port simultaneous transmission occurs in the cell A is received through switching from the cell B to the cell A.

### <Example 7>

Information regarding whether simultaneous transmission may be performed for each combination between a certain serving cell and other serving cell(s) is configured in the terminal 20 from the base station 10. Alternatively, information regarding whether simultaneous transmission may be performed in units of serving cells or units of cell groups instead of each combination with other serving cell(s) may be configured. As for the configuration in the units of serving cells, for example, in a configuration for the cell A, when "simultaneous transmission OK" is configured, it may mean that simultaneous transmission with any cell is OK as long as the cell forms a combination with the cell A.

For example, it is assumed that information regarding whether simultaneous transmission may be performed is included in a certain RRC message (examples: ServingCellConfig or CellGroupConfig). In this case, for example, it is assumed that the terminal 20 receives an RRC message for the cell A and detects information indicating that "simultaneous transmission can be performed in the cell A and the cell B" in the RRC message. In this case, it is assumed that the terminal 20 receives UL scheduling information in which simultaneous transmission occurs in the cell A and the cell B. In this case, the base station 10 can perform UL scheduling in which simultaneous transmission occurs in the cell A and the cell B on the terminal 20.

### <Example 8>

Information regarding case interpretation in a case where an instruction for switching from a specific port configuration to another specific port configuration is given for each combination between a certain serving cell and other serving cell(s) may be configured in the terminal 20 from the base station 10. Alternatively, information regarding case interpretation in a case where an instruction for switching from a specific port configuration to another specific port configuration is given in units of serving cells or units of cell groups instead of each combination with other serving cell(s) may be configured.

For example, it is assumed that information regarding case interpretation is included in a certain RRC message (examples: ServingCellConfig or CellGroupConfig).

In this case, for example, when the terminal 20 receives the RRC message and detects that "information for uniquely determining a case number of a transition destination in a case where the case number of the transition destination is not uniquely determined at the time of transition from a state of a certain Tx chain (a certain case number) to a state of another Tx chain (another case number) after UL Tx switching" is included in the RRC message, the terminal 20 determines the transition destination Tx chain (port configuration) after UL Tx switching according to the information.

The above-described "information for determining" may be an explicit "set of a case number before transition and a case number of a transition destination", or may be information indicating that "two ports are connected to one carrier" or information indicating that "one port is connected to one carrier".

Here, as an example, it is assumed that the case configuration and the transmission port configuration in Figs. 17 and 18 are used. Here, it is assumed that "option 2: simultaneous transmission across up to 2 carriers" is configured. In order to simplify the description, it is assumed that only Case 1, Case 2, and Case 3 in Fig. 18 are used.

It is assumed that information indicating that "in a case where there is Case 2 before the transition and there are Case 1 and Case 3 as candidates for a transition destination, Case 2 transitions to Case 3" is configured as the explicit information in the terminal 20. In this case, when scheduling corresponding to 1P+0P+0P+0P is performed according to DCI in the state of Case 2, the terminal 20 switches Case 2 to Case 3.

It is assumed that information indicating that "one port is connected to one carrier" is configured as the above-described information in the terminal 20. In this case, when UL transmission of 1P+0P+0P+0P is scheduled according to DCI in the state of Case 2, the terminal 20 switches Case 2 to Case 1.

The base station 10 can perform subsequent scheduling on the assumption of the transition destination described above.

### <Example 9>

Information regarding the number of ports that are band switching targets in units of cell groups is configured in the terminal 20 from the base station 10. In addition to this, or in place of this, information regarding whether or not each serving cell is associated with a port that is a band switching target may be configured in the terminal 20 from the base station 10. Information regarding whether or not each serving cell is associated with a port that is not a band switching target may be configured in the terminal 20 from the base station 10.

The information regarding whether or not a serving cell is associated with a port that is a band switching target is an example of information regarding an antenna port that is a band switching target. The information regarding whether or not a serving cell is associated with a port that is not a band switching target is an example of information regarding an antenna port that is not a band switching target.

For example, when the terminal 20 receives information indicating that "the cell A and the cell B are switching targets of the port 1, and the cell C fixedly uses the port 2" from the base station 10 according to an RRC message, it is assumed that scheduling corresponding to "transmission being performed at the cell A or the cell B by the port 1, and transmission being performed at the cell C by the port 2" is performed. The base station 10 can perform scheduling corresponding to "transmission being performed at the cell A or the cell B by the port 1, and transmission being performed at the cell C by the port 2" on the terminal 20.

As described above, with the technology according to the second embodiment described with reference to Examples 1 to 9, the base station 10 can give a configuration/instruction according to the capability related to UL Tx switching to the terminal 20, so that the UL Tx switching can be appropriately performed.

### (Third Embodiment)

### <Problem>

As described above, in Release 18, the UL Tx switching scheme (hereinafter, Rel-18 Tx Switching) between three or four bands under the restriction of simultaneous transmission of two or less is considered (for example, "New WID on Multi-carrier enhancements", RP-213577, 3GPP TSG RAN Meeting #94e, 3GPP, December 2021).

Incidentally, in a case where the number of bands that can be used in UL transmission is two, when an instruction for transmission at one port in one band is given, a problem (ambiguous state issue) in which there are two band combination candidates is assumed. In order to solve such a problem, a parameter (uplinkTxSwitching-DualUL-TxState) that designates whether 1Tx is assumed for each band or 2Tx is assumed for a band in which transmission is performed is introduced.

For example, as illustrated in Fig. 12, in a case where the number of bands that can be used in the UL transmission is two, Option 2 of Rel-17 UL Tx switching (Option that allows simultaneous transmission of two carriers) is considered. In such a case, in Case 2 in which a dual UL of the band B is executed, when an instruction for transmission at one port in the band A is given, a problem (ambiguous state issue) in which band combination candidates are two of Case 1 (1P+0P) and Case 3 (1P+0P) is assumed. In such a case, Case 1 (1T+1T) is selected when oneT is configured in uplinkTxSwitching-DualUL-TxState, and Case 3 (2T+0T) is selected when twoT is configured in uplinkTxSwitching-DualUL-TxState. The uplinkTxSwitching-DualUL-TxState may be included in the RRC parameter (CellGroupConfig).

However, when the number of bands that can be used in the UL transmission increases to three or four, the number of combinations of bands used in the UL transmission also increases. Therefore, even if the above parameter (uplinkTxSwitching-DualUL-TxState) is used, a problem (ambiguous state issue) in which there are still two or more band combination candidates is assumed.

For example, as illustrated in Fig. 18, in a case where the number of bands that can be used in the UL transmission is four, Option 2 of Rel-18 UL Tx switching (Option that allows simultaneous transmission of two carriers) is considered. In such a case, in Case 2 in which a dual UL of the band B is executed, in a case where an instruction for the transmission at one port in the band A is given, a problem (ambiguous state issue) is assumed in which four band combination candidates are Case 1 (1P+0P+0P+0P), Case 3 (1P+0P+0P+0P), Case 4 (1P+0P+0P+0P), and Case 5 (1P+0P+0P+0P). In such a case, in a case where twoT is configured in uplinkTxSwitching-DualUL-TxState, Case 3 (2T+0T+0T+0T) is selected, and thus there is no problem. However, in a case where oneT is configured in uplinkTxSwitching-DualUL-TxState, three of Case 1 (1T+1T+0T+0T), Case 4 (1T+0T+1T+0T), and Case 5 (1T+0T+0T+1T) remain as band combination candidates.

Here, as described in <Example 8> of the second embodiment, it is conceivable to configure information regarding case interpretation, but in a case where RRC signaling for each combination of serving cells or for each serving cell is required, a signaling load increases.

### <Operation Example>

Hereinafter, an operation example for solving the above-described problem will be described. Hereinafter, uplink transmission (UL transmission) using N (where N is a natural number equal to or less than M) bands selected from M (where M is a natural number equal to or greater than 3) bands is assumed.

Although not particularly limited, M may be 3 or 4 similarly to Rel-18. However, M may be 5 or more. N may be 2 similarly to Rel-18. However, N may be 3 or more, or may be 1. The UL transmission may be read as PUSCH transmission.

In the following description, a case will be considered in which a band used in the UL transmission is switched from a combination of one or more first bands (hereinafter, first band(s)) to a combination of one or more second bands (hereinafter, second band(s)).

In the third embodiment, in a case where an instruction for transmission at one port is given and two or more band combination candidates are assumed, the terminal 20 determines a band combination from two or more band combinations on the basis of a specific rule. In a case where an instruction for transmission at one port is given and two or more band combination candidates are assumed, the base station 10 determines a band combination from two or more band combinations on the basis of a specific rule.

That is, in the third embodiment, a specific rule to be applied in a case where the number of candidates of the second band(s) is two or more (ambiguous state) is defined.

First, the specific rule includes a rule in which, when twoT is configured in uplinkTxSwitching-DualUL-TxState, the second band(s) in which all Tx chains are associated with a band in which an instruction for transmission at one port (hereinafter, 1port) is given is (are) selected. Such a rule may be similar to that in Rel-17.

Second, the specific rule may include Alt. described below when oneT is configured in uplinkTxSwitching-DualUL-TxState.

### <Alt. 1>

The specific rule may be a predefined rule. In other words, the specific rule may be predefined in the radio communication system (specification). As options of the specific rule, the following options are conceivable.

In Option 1, a case is assumed in which an instruction for 1port transmission is given (scheduled or configured) in a target serving cell (band) in a state in which all Tx chains are associated with a specific serving cell (band) other than the target serving cell (band). In such a case, the specific rule may be a rule that switches at least one Tx chain to the target serving cell (band) and does not switch the remaining Tx chain while keeping the specific serving cell (band).

For example, as illustrated in Fig. 18, in a case where the number of bands that can be used in the UL transmission is four, a case is assumed in which an instruction for 1port transmission in the band B is given (scheduled or configured) in a state (Case 3) in which an instruction for 2port transmission in the band A is given (scheduled or configured) . In such a case, when oneT is configured in the uplinkTxSwitching-DualUL-TxState, one Tx chain may be switched to the band B, while the remaining Tx chain may remain in the band A. That is, Case 1 may be selected as a combination of bands.

In Option 2, a case is assumed in which an instruction for 1port transmission in a target serving cell (band) is given (scheduled or configured) in a state in which Tx chains are respectively associated with different specific serving cells (bands) other than the target serving cell (band). In such a case, the specific rule may be a rule that switches at least one Tx chain to the target serving cell (band) and does not switch the remaining Tx chain while keeping the specific serving cell (band).

The specific rule may include a rule that determines which a specific serving cell (band) of different specific serving cells (bands) is switched (or left) to the target serving cell (band). Such a rule may be any of a specific serving cell (band) switching (or leaving) rule having a relatively low serving cell index, a specific serving cell (band) switching (or leaving) rule having a relatively high serving cell index, a specific serving cell (band) switching (or leaving) rule having a relatively low frequency, and a specific serving cell (band) switching (or leaving) rule having a relatively high frequency.

In Option 3, a case is assumed in which an instruction for 1port transmission in a target serving cell (band) is given (scheduled or configured) in a state in which Tx chains are respectively associated with specific serving cells (bands) other than the target serving cell (band). In such a case, the specific rule may be a rule that switches at least one Tx chain to the target serving cell (band) and sets the remaining Tx chain as a switching destination serving cell (band) for the corresponding specific serving cell (band).

The switching destination serving cell (band) may be any one of a serving cell (band) having the lowest serving cell index, a serving cell (band) having the highest serving cell index, a serving cell (band) having the lowest frequency, and a serving cell (band) having the highest frequency among serving cells (bands) that can be used in the UL transmission. Alternatively, the switching destination serving cell (band) may be a PCell or a PUCCH cell.

In Alt. 1, different specific rules may be applied according to a state (first band(s)) before UL Tx Switching. For example, Option 1 may be applied in a case where Tx chains are associated with the same band, and Option 2 or Option 3 may be applied in a case where Tx chains are associated with different bands.

In Alt. 1, the same specific rule may be applied regardless of a state (first band(s)) before UL Tx Switching. For example, Option 3 may be applied regardless of a state (first band(s)) before Tx switching.

According to Alt. 1, since a specific rule to be applied in an ambiguous state is predefined, UL Tx Switching can be appropriately performed while reducing a signaling load.

### <Alt. 2>

The specific rule may be specified on the basis of a parameter reported from a network (base station 10). The parameter may be an RRC parameter.

In Alt. 2, in a case where it is assumed that an instruction for 1port transmission in a target serving cell (band) is given (scheduled or configured), it may be assumed that one Tx chain is associated with the target serving cell (band). As parameter options, the following options are conceivable.

In Option 1, the parameter may be a parameter for configuring one serving cell index. One serving cell index designates a serving cell (band) with which a Tx chain other than the Tx chain associated with a target serving cell (band) is associated.

For example, one Tx chain may be associated with a target serving cell (band), and the remaining Tx chain may be associated with a serving cell (band) designated by one serving cell index, regardless of a state (first band(s)) before UL Tx switching.

Note that, in a case where a serving cell (band) designated by one serving cell index is the same as a target serving cell (band), it may be handled as the following options.

In Option 1-1, all Tx chains may be associated with a target serving cell (band). That is, this may be handled similarly to the case where twoT is configured in uplinkTxSwitching-DualUL-TxState.

In Option 1-2, a serving cell (band) associated with remaining Tx chain other than a Tx chain with which the serving cell (band) designated by one serving cell index is associated may be specified on the basis of a predefined rule. As a predefined rule, the specific rule of Option 3 of Alt. 1 may be used.

In Option 2, the parameter may be a parameter for configuring two or more serving cell indexes. The parameter may be a parameter for configuring the priority of each of two or more serving cell indexes.

For example, one Tx chain may be associated with a target serving cell (band), and the remaining Tx chain may be associated with a serving cell (band) related to a serving cell index having the highest priority.

Note that, in a case where a serving cell (band) related to a serving cell index having the highest priority is the same as a target serving cell (band), one Tx chain may be associated with the target serving cell (band), and the remaining Tx chain may be associated with a serving cell (band) related to a serving cell index having the second highest priority.

According to Alt. 2, a specific rule to be applied in an ambiguous state is specified on the basis of a parameter reported from a network, so that UL Tx Switching can be appropriately performed while reducing a signaling load. Note that, in Alt. 2, since a parameter only includes some serving cell indexes, a signaling load can be reduced compared with <Example 8> of the second embodiment in which RRC signaling is required for each combination of serving cells or each serving cell.

### <Alt. 3>

The specific rule is determined on the basis of capability information (UE capability) reported from the terminal.

In Alt. 3, in a case where it is assumed that an instruction for 1port transmission in a target serving cell (band) is given (scheduled or configured), it may be assumed that one Tx chain is associated with the target serving cell (band) .

The UE capability may include an information element that designates a desired serving cell (band) to be associated with a Tx chain other than the Tx chain associated with the target serving cell (band).

For example, one Tx chain may be associated with the target serving cell (band) and the remaining Tx chain may be associated with the desired serving cell (band) regardless of the state (first band (s)) before the UL Tx switching.

The UE capability may include an information element that designates two or more desired serving cells (bands). The UE capability may include an information element that designates the priority of each of two or more desired serving cells (bands).

For example, regardless of a state (first band(s)) before UL Tx Switching, one Tx chain may be associated with the target serving cell (band), and the remaining Tx chain may be associated with a desired serving cell (band) having a relatively high priority.

Alt. 3 may be combined with Alt. 2. Specifically, a parameter reported from the network (base station 10) may include a serving cell index of a serving cell (band) selected from desired serving cells (bands) reported in UE capability.

### <Others>

In Rel-17, uplinkTxSwitching-DualUL-TxState is a parameter used in a dual UL (for example, Option 2 illustrated in Fig. 18), but in a case where the number of bands that can be used in the UL transmission is three or more, the uplinkTxSwitching-DualUL-TxState may be used not only in a dual UL but also in a switched UL (for example, Option 1 illustrated in Fig. 18). In such a case, the name (oneT, twoT) of the parameter designating 1Tx or 2Tx may be changed from the uplinkTxSwitching-DualUL-TxState. In a case where 1Tx (oneT) is configured, the above-described specific rules (Alt. 1 to Alt. 3) may be applied.

In a case where whether or not a dual UL is enabled is reported or configured for each combination of bands, a combination of bands in which a dual UL is disabled may be excluded from band candidates to be associated with a Tx chain when oneT is configured. For example, under the premise that a dual UL of the bands A+B and the bands A+C is enabled and a dual UL of the bands B+C is disabled, when an instruction for 1port transmission in the band B is given in the state of the bands A+C, the bands A+B may be selected without selecting the bands B+C. The rule for excluding a combination of bands for which a dual UL is disabled may be considered as an example of the specific rule.

### (Apparatus Configuration)

Next, functional configuration examples of the base station 10 and the terminal 20 that execute the processes and operations described above will be described.

### <Base Station 10>

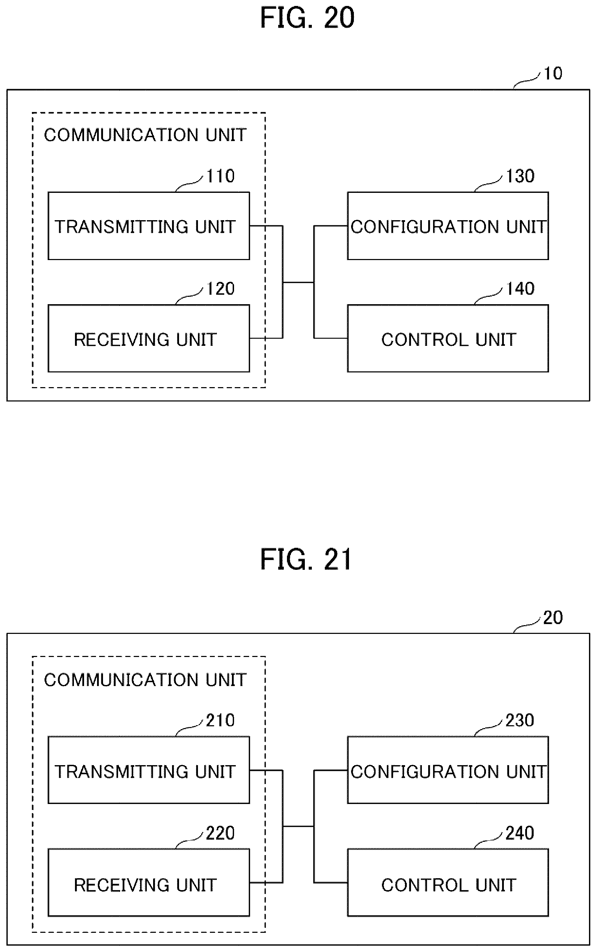

Fig. 20 is a diagram illustrating an example of a functional configuration of the base station 10. As illustrated in Fig. 20, the base station 10 includes a transmitting unit 110, a receiving unit 120, a configuration unit 130, and a control unit 140. The functional configuration illustrated in Fig. 20 is merely an example. As long as the operation according to the embodiment of the present invention can be executed, the functional classification and the name of the functional unit may be anything. The transmitting unit 110 and the receiving unit 120 may be collectively referred to as a communication unit.

The transmitting unit 110 has a function of generating a signal to be transmitted to the terminal 20 side and wirelessly transmitting the signal. The receiving unit 120 has a function of receiving various signals transmitted from the terminal 20 and acquiring, for example, information of a higher layer from the received signals. The transmitting unit 110 has a function of transmitting an NR-PSS, an NR-SSS, an NR-PBCH, DL/UL control signals, DCI based on a PDCCH, data based on a PDSCH, and the like to the terminal 20.

The configuration unit 130 stores configuration information configured in advance and various types of configuration information to be transmitted to the terminal 20 in a storage device included in the configuration unit 130, and reads the configuration information from the storage device as necessary.

The control unit 140 schedules DL reception or UL transmission of the terminal 20 via the transmitting unit 110. The control unit 140 includes a function of performing LBT. The functional unit related to signal transmission in the control unit 140 may be included in the transmitting unit 110, and the functional unit related to signal reception in the control unit 140 may be included in the receiving unit 120. The transmitting unit 110 may be referred to as a transmitter, and the receiving unit 120 may be referred to as a receiver.

### <Terminal 20>

Fig. 21 is a diagram illustrating an example of a functional configuration of the terminal 20. As illustrated in Fig. 21, the terminal 20 includes a transmitting unit 210, a receiving unit 220, a configuration unit 230, and a control unit 240. The functional configuration illustrated in Fig. 11 is merely an example. As long as the operation according to the embodiment of the present invention can be executed, the functional classification and the name of the functional unit may be anything. The transmitting unit 210 and the receiving unit 220 may be collectively referred to as a communication unit.

The transmitting unit 210 creates a transmission signal from transmission data and wirelessly transmits the transmission signal. The receiving unit 220 wirelessly receives various signals and acquires a signal of a higher layer from a received signal of a physical layer. The receiving unit 220 has a function of receiving an NR-PSS, an NR-SSS, an NR-PBCH, a DL/UL/SL control signals, DCI based on a PDCCH, data based on a PDSCH, and the like transmitted from the base station 10. For example, the transmitting unit 210 may transmit a physical sidelink control channel (PSCCH), a physical sidelink shared channel (PSSCH), a physical sidelink discovery channel (PSDCH), a physical sidelink broadcast channel (PSBCH), or the like to another terminal 20 through D2D communication, and the receiving unit 220 may receive a PSCCH, a PSSCH, a PSDCH, a PSBCH, or the like from another terminal 20. The transmitting unit 210 includes the antenna port described in the present embodiment.

The configuration unit 230 stores various types of configuration information received from the base station 10 or another terminal by the receiving unit 220 in a storage device included in the configuration unit 230, and reads the various types of configuration information from the storage device as necessary. The configuration unit 230 also stores configuration information configured in advance.

The control unit 240 controls the terminal 20. The functional unit related to signal transmission in the control unit 240 may be included in the transmitting unit 210, and the functional unit related to signal reception in the control unit 240 may be included in the receiving unit 220. The transmitting unit 210 may be referred to as a transmitter, and the receiving unit 220 may be referred to as a receiver.

According to the present embodiment, at least the following terminal, base station, and communication method are provided. Hereinafter, the terminal, the base station, and the communication method will be described in six Supplements 1 to 6.

### <Supplement 1>

### (Supplementary Note 1)

A terminal including: a transmitting unit that reports as capability information, to a base station, the number of antenna ports in which a band is switchable in a transmission switching scheme in which a band is switchable between two or more bands in at least one of a plurality of antenna ports and a band to be used for transmission is switched between a total of three or more bands in the plurality of antenna ports; and a receiving unit that receives, from the base station, information regarding an antenna port that is a band switching target or information regarding an antenna port that is not a band switching target.

### (Supplementary Note 2)

A terminal including: a transmitting unit that reports as capability information, to a base station, information regarding a band to be used by an antenna port in which band switching is not performed in a transmission switching scheme in which a band is switchable between two or more bands in at least one of a plurality of antenna ports and a band to be used for transmission is switched between a total of three or more bands in the plurality of antenna ports; and a receiving unit that receives, from the base station, information regarding an antenna port that is a band switching target or information regarding an antenna port that is not a band switching target.

### (Supplementary Note 3)

The terminal according to Supplementary Note 1 or 2, in which, in a case where there is an antenna port in which band switching is not performed, the transmitting unit reports as two, a number of MIMO layers of a band to be used by the antenna port.

### (Supplementary Note 4)

The terminal according to any one of Supplementary Note 1 to 3, in which the transmitting unit reports information regarding a band that is a switching candidate in each antenna port.

### (Supplementary Note 5)

A base station including: a receiving unit that receives as capability information, from a terminal, the number of antenna ports in which a band is switchable in a transmission switching scheme in which a band is switchable between two or more bands in at least one of a plurality of antenna ports of the terminal and a band to be used for transmission is switched between a total of three or more bands in the plurality of antenna ports; and a transmitting unit that transmits, to the terminal, information regarding an antenna port that is a band switching target or information regarding an antenna port that is not a band switching target.

### (Supplementary Note 6)

A communication method executed by a terminal, the communication method including: reporting as capability information, to a base station, the number of antenna ports in which a band is switchable in a transmission switching scheme in which a band is switchable between two or more bands in at least one of a plurality of antenna ports and a band to be used for transmission is switched between a total of three or more bands in the plurality of antenna ports; and receiving, from the base station, information regarding an antenna port that is a band switching target or information regarding an antenna port that is not a band switching target.

According to any of Supplementary Notes 1 to 6, there is provided a technique capable of appropriately switching bands to be used for uplink transmission in a radio communication system. According to Supplementary Note 3, the number of MIMO layers can be appropriately configured. According to Supplementary Note 4, simultaneous monitoring can be clearly defined, and an operation becomes clear. Single piece of control information can be favorably received in a scheduling source cell. According to Supplementary Note 3, a switching candidate band is clarified.

### <Supplement 2>

### (Supplementary Note 1)

A terminal including: a transmitting unit that reports as capability information, to a base station, information regarding a band to be used in a transmission switching scheme in the transmission switching scheme in which a band is switchable between two or more bands in at least one of a plurality of antenna ports and a band to be used for transmission is switched between a total of three or more bands in the plurality of antenna ports; and a receiving unit that receives, from the base station, information for determining one of a plurality of states in a case where there are the plurality of states that are candidates for a transition destination when a transition is performed from a certain state related to the plurality of antenna ports to another state through band switching.

### (Supplementary Note 2)

The terminal according to Supplementary Note 1, in which the receiving unit receives, as the information for determining the one state, a maximum number of antenna ports that are usable for transmission in one band, or a set of a state before the transition and a state of the transition destination.

### (Supplementary Note 3)

The terminal according to Supplementary Note 1 or 2, in which the transmitting unit reports, to the base station, the number of carriers supported by the band to be used in the transmission switching scheme.

### (Supplementary Note 4)

The terminal according to any one of Supplementary Notes 1 to 3, in which the transmitting unit reports information regarding whether or not a downlink carrier is necessary in the band to be used in the transmission switching scheme.

### (Supplementary Note 5)

A base station including: a receiving unit that receives as capability information, from a terminal, information regarding a band to be used in a transmission switching scheme in the transmission switching scheme in which a band is switchable between two or more bands in at least one of a plurality of antenna ports of the terminal and a band to be used for transmission is switched between a total of three or more bands in the plurality of antenna ports; and a transmitting unit that transmits, to the terminal, information for determining one of a plurality of states in a case where there are the plurality of states that are candidates for a transition destination when a transition is performed from a certain state related to the plurality of antenna ports to another state through band switching.

### (Supplementary Note 6)

A communication method executed by a terminal, the communication method including: reporting as capability information, to a base station, information regarding a band to be used in a transmission switching scheme in the transmission switching scheme in which a band is switchable between two or more bands in at least one of a plurality of antenna ports and a band to be used for transmission is switched between a total of three or more bands in the plurality of antenna ports; and receiving, from the base station, information for determining one of a plurality of states in a case where there are the plurality of states that are candidates for a transition destination when a transition is performed from a certain state related to the plurality of antenna ports to another state through band switching.

According to any of Supplementary Notes 1 to 6, there is provided a technique capable of appropriately switching bands to be used for uplink transmission in a radio communication system. According to Supplementary Note 2, ambiguity of a transition destination can be resolved and an appropriate operation can be performed. According to Supplementary Note 3, the number of carriers in a band becomes clear. According to Supplementary Note 4, it is possible to configure a cell having no downlink carrier.

### <Supplement 3>

### (Supplementary Note 1)

A terminal including: a transmitting unit that reports, to a base station, capability information indicating whether or not power boosting is enabled in a case where transmission is performed at a plurality of antenna ports in a transmission switching scheme in which a band is switchable between two or more bands in at least one of a plurality of antenna ports and a band to be used for transmission is switched between a total of three or more bands in the plurality of antenna ports; and a receiving unit that receives, from the base station, information indicating whether or not power boosting is allowed in a case where transmission is performed at the plurality of antenna ports.

### (Supplementary Note 2)

The terminal according to Supplementary Note 1, in which the transmitting unit reports, to the base station, the capability information indicating whether or not power boosting is enabled for each combination of bands to be switched in a band combination, for each band, for each of all combinations of bands in a band combination, or for all supported band combinations.

### (Supplementary Note 3)

The terminal according to Supplementary Note 1 or 2, in which the receiving unit receives information regarding whether or not power boosting is allowed for each combination of serving cells, for each serving cell, or for each cell group.

### (Supplementary Note 4)

A base station including: a receiving unit that receives, from a terminal, capability information indicating whether or not power boosting is enabled in a case where transmission is performed at a plurality of antenna ports in a transmission switching scheme in which a band is switchable between two or more bands in at least one of a plurality of antenna ports of the terminal and a band to be used for transmission is switched between a total of three or more bands in the plurality of antenna ports; and a transmitting unit that transmits, to the terminal, information indicating whether or not power boosting is allowed in a case where transmission is performed at the plurality of antenna ports.

### (Supplementary Note 5)

A communication method executed by a terminal, the communication method including: reporting, to a base station, capability information indicating whether or not power boosting is enabled in a case where transmission is performed at a plurality of antenna ports in a transmission switching scheme in which a band is switchable between two or more bands in at least one of a plurality of antenna ports and a band to be used for transmission is switched between a total of three or more bands in the plurality of antenna ports; and receiving, from the base station, information indicating whether or not power boosting is allowed in a case where transmission is performed at the plurality of antenna ports.

According to any of Supplementary Notes 1 to 5, there is provided a technique capable of appropriately switching bands to be used for uplink transmission in a radio communication system. According to Supplementary Note 2, information regarding power boosting can be reported in various units. According to Supplementary Note 3, information regarding power boosting can be configured in various units.

### <Supplement 4>

### (Supplementary Note 1)

A terminal including: a transmitting unit that reports, to a base station, capability information regarding a band in which downlink communication interruption occurs during switching in a transmission switching scheme in which a band is switchable between two or more bands in at least one of a plurality of antenna ports and a band to be used for transmission is switched between a total of three or more bands in the plurality of antenna ports; and a receiving unit that receives, from the base station, control information for scheduling uplink transmission.

### (Supplementary Note 2)

The terminal according to Supplementary Note 1, in which the transmitting unit reports, to the base station, the capability information regarding the band in which downlink communication interruption occurs during switching, for each combination of bands for which transmission switching is performed in a band combination, for each band, for each of all combinations of bands in a band combination, or for all supported band combinations.

### (Supplementary Note 3)

The terminal according to Supplementary Note 1 or 2, in which the transmitting unit reports, as the capability information, a bitmap in which each bit indicates presence or absence of downlink communication interruption in a band.

### (Supplementary Note 4)

A base station including: a receiving unit that receives, from a terminal, capability information regarding a band in which downlink communication interruption occurs during switching in a transmission switching scheme in which a band is switchable between two or more bands in at least one of a plurality of antenna ports of the terminal and a band to be used for transmission is switched between a total of three or more bands in the plurality of antenna ports; and a transmitting unit that transmits control information for scheduling uplink transmission to the terminal.

### (Supplementary Note 5)

A communication method executed by a terminal, the communication method including: reporting, to a base station, capability information regarding a band in which downlink communication interruption occurs during switching in a transmission switching scheme in which a band is switchable between two or more bands in at least one of a plurality of antenna ports and a band to be used for transmission is switched between a total of three or more bands in the plurality of antenna ports; and receiving, from the base station, control information for scheduling uplink transmission.

According to any of Supplementary Notes 1 to 5, there is provided a technique capable of appropriately switching bands to be used for uplink transmission in a radio communication system. According to the Supplementary Note 2, it is possible to report information regarding downlink communication interruption in various units. According to Supplementary Note 3, it is possible to efficiently report information regarding downlink communication interruption.

### <Supplement 5>

### (Supplementary Note 1)

A terminal including: a transmitting unit that reports, to a base station, capability information indicating a switching time required for switching between bands in a transmission switching scheme in which a band is switchable between two or more bands in at least one of a plurality of antenna ports and a band to be used for transmission is switched between a total of three or more bands in the plurality of antenna ports; and a receiving unit that receives, from the base station, information regarding a cell in which the switching time occurs.

### (Supplementary Note 2)

The terminal according to Supplementary Note 1, in which the transmitting unit reports the capability information indicating the switching time to the base station for each combination of bands to be switched in a band combination, for each band, for each of all combinations of bands in a band combination, or for all supported band combinations.

### (Supplementary Note 3)

The terminal according to Supplementary Note 1 or 2, in which the receiving unit receives information regarding a cell in which the switching time occurs for each combination of serving cells, for each serving cell, or for each cell group.

### (Supplementary Note 4)

A base station including: a receiving unit that receives, from a terminal, capability information indicating a switching time required for switching between bands in a transmission switching scheme in which a band is switchable between two or more bands in at least one of a plurality of antenna ports of the terminal and a band to be used for transmission is switched between a total of three or more bands in the plurality of antenna ports; and a transmitting unit that transmits, to the terminal, information regarding a cell in which the switching time occurs.

### (Supplementary Note 5)

A method executed by a terminal, the method including: reporting, to a base station, capability information indicating a switching time required for switching between bands in a transmission switching scheme in which a band is switchable between two or more bands in at least one of a plurality of antenna ports and a band to be used for transmission is switched between a total of three or more bands in the plurality of antenna ports; and receiving, from the base station, information regarding a cell in which the switching time occurs.

According to any of Supplementary Notes 1 to 5, there is provided a technique capable of appropriately switching bands to be used for uplink transmission in a radio communication system. According to Supplementary Note 2, capability information indicating a switching time can be reported in various units. According to the Supplementary Note 3, information regarding a switching time can be configured in various units.

### <Supplement 6>

### (Supplementary Note 1)

A terminal including: a transmitting unit that reports, to a base station, capability information indicating whether or not simultaneous transmission can be performed between bands in a transmission switching scheme in which a band is switchable between two or more bands in at least one of a plurality of antenna ports and a band to be used for transmission is switched between a total of three or more bands in the plurality of antenna ports; and a receiving unit that receives, from the base station, information regarding a cell for which simultaneous transmission is allowed.

### (Supplementary Note 2)

The terminal according to Supplementary Note 1, in which the transmitting unit reports, to the base station, the capability information indicating whether or not simultaneous transmission can be performed for each combination of bands to be switched in a band combination, for each band, for each of all combinations of bands in a band combination, or for all supported band combinations.

### (Supplementary Note 3)

The terminal according to Supplementary Note 1 or 2, in which the receiving unit receives the information regarding the cell for which simultaneous transmission is allowed for each combination of serving cells, for each serving cell, or for each cell group.

### (Supplementary Note 4)

A base station including: a receiving unit that receives, from a terminal, capability information indicating whether or not simultaneous transmission can be performed between bands in a transmission switching scheme in which a band is switchable between two or more bands in at least one of a plurality of antenna ports of the terminal and a band to be used for transmission is switched between a total of three or more bands in the plurality of antenna ports; and a transmitting unit that transmits, to the terminal, information regarding a cell for which simultaneous transmission is allowed.

### (Supplementary Note 5)

A communication method executed by a terminal, the communication method including: reporting, to a base station, capability information indicating whether or not simultaneous transmission can be performed between bands in a transmission switching scheme in which a band is switchable between two or more bands in at least one of a plurality of antenna ports and a band to be used for transmission is switched between a total of three or more bands in the plurality of antenna ports; and receiving, from the base station, information regarding a cell for which simultaneous transmission is allowed.

According to any of Supplementary Notes 1 to 5, there is provided a technique capable of appropriately switching bands to be used for uplink transmission in a radio communication system. According to Supplementary Note 2, it is possible to report capability information indicating whether simultaneous transmission can be performed in various units. According to Supplementary Note 3, it is possible to configure information regarding various simultaneous transmissions.

### <Supplement 7>

### (Supplementary Note 1)

A terminal including: a transmitting unit that performs uplink transmission using N (where N is a natural number equal to or less than M) bands selected from among M (where M is a natural number equal to or greater than 3) bands; and a control unit that, in a case where an instruction for transmission at one port is given and candidates of two or more band combinations are assumed, determines a band combination from among the two or more band combinations on a basis of a specific rule.

### (Supplementary Note 2)

The terminal according to Supplementary Note 1, in which the specific rule is a predefined rule.

### (Supplementary Note 3)

The terminal according to Supplementary Note 1, in which the specific rule is specified on a basis of a parameter reported from a network.

### (Supplementary Note 4)

The terminal according to Supplementary Note 1, in which the specific rule is specified on a basis of capability information reported from the terminal.

### (Supplementary Note 5)

A base station including: a receiving unit that performs uplink reception using N (where N is a natural number equal to or less than M) bands selected from among M (where M is a natural number equal to or greater than 3) bands; and a control unit that, in a case where an instruction for transmission at one port is given and candidates of two or more band combinations are assumed, assumes that a terminal determines a band combination from among the two or more band combinations on a basis of a specific rule.

### (Supplementary Note 6)

A communication method including: a step of performing uplink transmission using N (where N is a natural number equal to or less than M) bands selected from among M (where M is a natural number equal to or greater than 3) bands; and a step of, in a case where an instruction for transmission at one port is given and candidates of two or more band combinations are assumed, determining a band combination from among the two or more band combinations on a basis of a specific rule.

### (Hardware Configuration)

Note that the block diagrams (Fig. 20 and Fig. 20) that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, functional block (components) to implement a function of transmission may be referred to as a "transmitting section (transmitting unit)", a "transmitter", and the like. The method for implementing each component is not particularly limited as described above.

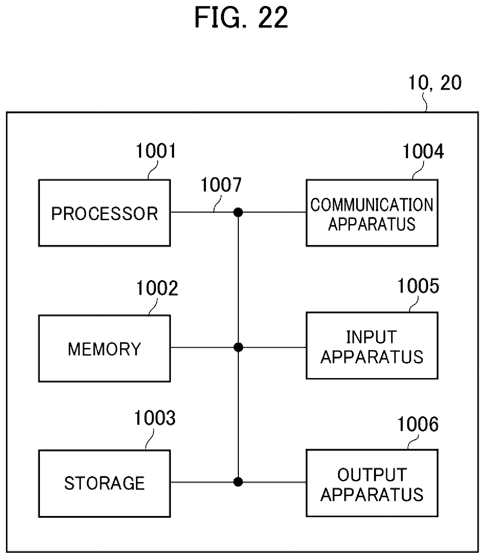

The base station 10, the terminal 20 and the like in one embodiment of the present disclosure may function as a computer that executes the processes of the radio communication method of the present disclosure. Fig. 22 is a diagram to illustrating an example of a hardware configuration of the base station 10 and the terminal 20 according to one embodiment of the present disclosure. The base station 10 and the terminal 10 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a unit, and so on can be interchangeably interpreted. The hardware configuration of the base station 10 and the terminal 20 may be configured to include one or more of apparatuses shown in the drawings, or may be configured not to include part of apparatuses.

Each function of the base station 10 and the terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the control unit 140, the control 240, and the like described above may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control unit 140 of the base station 10 shown in Fig. 20 may be implemented by a control program which is stored in the memory 1002 and is operated by the processor 1001. Also, for example, the control unit 240 of the terminal 20 shown in Fig. 21 may be implemented by a control program which is stored in the memory 1002 and is operated by the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically Erasable Programmable ROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the communication method according to one embodiment of the present disclosure.

The storage 1003 is a computer-readable recording medium, and may be constituted with, for example, at least one of an optical disk such as a Compact Disc ROM (CD-ROM), a hard disk drive, a flexible disk, a magneto-optical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and other appropriate storage media. The above recording medium may be a database including the memory 1002 and/or the storage 1003, a server, or any other appropriate medium.

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, a transmitting and receiving antenna, an amplifier unit, a transmitting and receiving unit, a transmission channel interface and the like may be implemented by the communication apparatus 1004. The transmitting and receiving unit may be realized by physically or logically separating it into a transmitting unit and a receiving unit.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the terminal 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

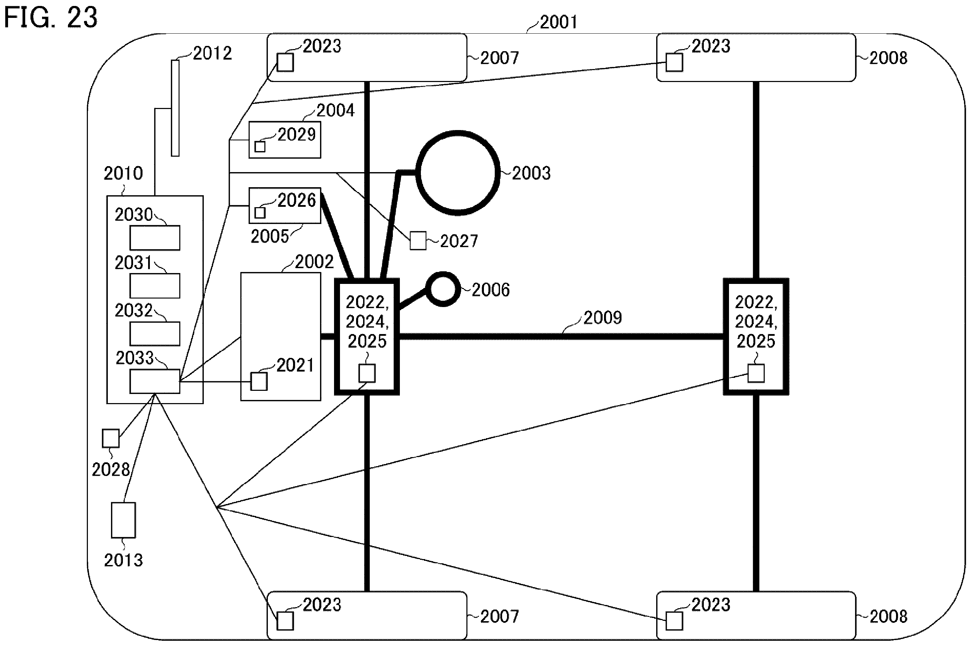

A vehicle 2001 may be provided with the terminal 20 or the base station 10. Fig. 23 illustrates an example of a configuration of the vehicle 2001. As illustrated in FIG. 23, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021 to 2029, an information service unit 2012, and a communication module 2013. Each aspect/embodiment described in the present disclosure may be applied to a communication apparatus mounted in the vehicle 2001, or applied to a communication module 2013, for example. A function of the terminal 20 may be mounted to the communication module 2013.

The drive unit 2002 may include, for example, an engine, a motor, and a hybrid of an engine and a motor. The steering unit 2003 includes at least a steering wheel and is configured to steer at least one of the front wheel and the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021 to 2027 provided in the vehicle 2001. The electronic control unit 2010 may be referred to as an ECU (Electronic control unit) .

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, and an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 1 via a communication port. For example, the communication module 2013 transmits and receives data via a communication port 2033, to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and sensors 2021 to 2029 provided in the vehicle 1.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, the base station, a mobile station, or the like.

The communication module 2013 transmits the current signal from the current sensor, which is input to the electronic control unit 2010, to external devices through radio communication. In addition, the communication module 2013 transmits to external devices through radio communication, the front or rear wheel rotation signal acquired by the revolution sensor 2022, the front or rear wheel pneumatic signal acquired by the pneumatic sensor 2023, the vehicle speed signal acquired by the vehicle speed sensor 2024, the acceleration signal acquired by the acceleration sensor 2025, the stepped-on accelerator pedal signal acquired by the accelerator pedal sensor 2029, the stepped-on brake pedal signal acquired by the brake pedal sensor 2026, the operation signal of the shift lever acquired by the shift lever sensor 2027, and the detection signal, acquired by the object detection sensor 2028, for detecting an obstacle, a vehicle, a pedestrian, and the like.

The communication module 2013 receives various types of information (traffic information, signal information, inter-vehicle information, etc.) transmitted from the external devices and displays the received information on the information service unit 2012 provided in the vehicle. In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021 to 2029, etc., mounted in the vehicle 2001.

### (Supplementary information on the embodiment)

The above is an explanation of the embodiment of the present invention, but the disclosed invention is not limited to such an embodiment, and those skilled in the art will understand various alternative, modified, substituted, and replacement examples. The explanation uses specific numerical examples to facilitate understanding of the invention, but unless otherwise specified, these numerical examples are merely examples, and any appropriate value may be used. The division of items in the above explanation is not essential to the invention, and matters described in two or more items may be used in combination as necessary, and matters described in one item may be applied to matters described in another item (as long as inconsistencies do not arise). The boundaries of functional or processing units in the functional block diagrams do not necessarily correspond to the boundaries of physical components. The operation of multiple functional units may be carried out by a single physical component, or the operation of a single functional unit may be carried out by multiple physical components. The processing sequence described in the embodiment may be interchanged as long as there is no contradiction. For the sake of convenience in explaining the processing, the base station 10 and the terminal 20 are described using the functional block diagrams, but such devices may be implemented in hardware, software, or a combination of them. The software that operates on the processor of the base station 10 according to an embodiment of the present invention and the software that operates on the processor of the terminal 20 according to an embodiment of the present invention may be stored in any suitable storage medium, such as random access memory (RAM), flash memory, read-only memory (ROM), EPROM, EEPROM, registers, hard disk (HDD), removable disk, CD-ROM, database, server, etc.

Notification of information is by no means limited to the aspects/embodiments described in the present disclosure, and other methods may be used as well. For example, notification of information in the present disclosure may be implemented by using physical layer signaling (for example, Downlink Control Information (DCI), Uplink Control Information (UCI)), higher layer signaling (for example, Radio Resource Control (RRC) signaling, Medium Access Control (MAC) signaling, broadcast information (Master Information Block (MIB), System Information Block (SIB), and so on)), and other signals or combinations of these. Also, RRC signaling may be referred to as an "RRC message", and can be, for example, an RRC Connection Setup message, an RRC Connection Reconfiguration message, and so on.

The aspects/embodiments illustrated in the present disclosure may be applied to Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (registered trademark), GSM (registered trademark), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate systems, next-generation systems that are enhanced based on these, and the like. A plurality of systems may be combined (for example, a combination of at least one of LTE and LTE-A, and 5G, and the like) for application.

The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

Operations which have been described in the present disclosure to be performed by the base station 10 may, in some cases, be performed by an upper node of the base station 10. In a network including one or a plurality of network nodes with the base station 10, it is clear that various operations that are performed to communicate with the terminal 20 can be performed by at least one of the base station 10 and one or more network nodes (for example, MME, S-GW, and so on may be possible, but these are not limiting) other than the base station 10. According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) and wireless technologies (infrared, microwave, etc.), at least one of these wired line technologies and wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and a term required for understanding of the present specification may be replaced by a term having the same or similar meaning. For example, at least one of a channel and a symbol may be a signal (signaling). Further, a signal may be a message. Further, the Component Carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms such as a "Base Station (BS)", a "radio base station", a "fixed station", a "NodeB", an "eNB (eNodeB)", a "gNB (gNodeB)", an "access point", a "transmission point", a "reception point", a "transmission/reception point", a "cell", a "sector", a "cell group", a "carrier", a "component carrier", and so on can be used interchangeably. The base station may be referred to as the terms such as a "macro cell", a "small cell", a "femto cell", a "pico cell", and so on.

The base station can accommodate one or a plurality of (for example, three) cells. When the base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "Mobile Station (MS)", "user terminal", "User Equipment (UE)", and "terminal" may be used interchangeably.

A mobile station may be referred to as a "subscriber station", a "mobile unit", a "subscriber unit", a "wireless unit", a "remote unit", a "mobile device", a "wireless device", a "wireless communication device", a "remote device", a "mobile subscriber station", an "access terminal", a "mobile terminal", a "wireless terminal", a "remote terminal", a "handset", a "user agent", a "mobile client", a "client", or some other appropriate terms in some cases by the person skilled in the art.

At least one of the base station and the mobile station may be referred to as a "transmitting apparatus", a "receiving apparatus", a "radio communication apparatus", and so on. Note that at least one of the base station and the mobile station may be a device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of the base station and the mobile station also includes an apparatus which does not necessarily move during communication operation. For example, at least one of the base station and the mobile station may be an Internet of Things (IoT) device such as a sensor.

Furthermore, the base station in the present disclosure may be interpreted as a terminal. For example, each aspect/embodiment of the present disclosure may be applied to the structure that replaces a communication between the base station and the terminal with a communication between a plurality of terminals 20 (for example, which may be referred to as "Device-to-Device (D2D)", "Vehicle-to-Everything (V2X)", and the like). In this case, the terminal 20 may have the functions of the base station 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the terminal in the present disclosure may be interpreted as the base station. In this case, the base station may have the functions of the terminal described above.

As used herein, the term "determining" may encompasses a wide variety of actions. For example, "determining" may be regarded as judging, calculating, computing, processing, deriving, investigating, looking up, search inquiry (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing and the like. That is, "determining" may be regarded as a certain type of action related to determining. Furthermore, "determining" may be regarded as "assuming", "expecting", "considering", and the like.

The term "connected" or "coupled" or any variation thereof means any direct or indirect connection or coupling between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS", and may be referred to as a "pilot", depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may be constituted of one or a plurality of frames in the time domain. Each of one or a plurality of frames in the time domain may be referred to as a "subframe". Furthermore, a subframe may be constituted of one or a plurality of slots in the time domain. A subframe may be a fixed time length (for example, 1 ms) independent of numerology.

Numerology may be a communication parameter applied to at least one of transmission and reception of a certain signal or channel. For example, numerology may indicate at least one of a SubCarrier Spacing (SCS), a bandwidth, a symbol length, a cyclic prefix length, a Transmission Time Interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols less than the number of slots. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe". Also, a slot may be referred to as a unit time. The unit times may differ for each cell depending on numerology.

Here, a TTI refers to the minimum time unit of scheduling in radio communication, for example. For example, in LTE systems, the base station performs, for each terminal 20, scheduling of allocating radio resources (such as a frequency bandwidth and transmit power available for each terminal 20) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot", or the like. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "SubCarrier Group (SCG)", a "Resource Element Group (REG)", a "PRB pair", an "RB pair" and so on.

Furthermore, a resource block may be constituted of one or a plurality of Resource Elements (REs). For example, one RE may correspond to a radio resource field of one subcarrier and one symbol.

A Bandwidth Part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

In the present disclosure, where an article is added by translation, for example "a", "an", and "the", the disclosure may include that the noun following these articles is plural.

In this disclosure, the term "A and B are different" may mean "A and B are different from each other". It should be noted that the term "A and B are different" may mean "A and B are different from C". Terms such as "separated" or "combined" may be interpreted in the same way as the above-described "different".

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### EXPLANATION OF REFERENCE NUMERALS

- 10: base station
- 110: transmitting unit
- 120: receiving unit
- 130: configuration unit
- 140: control unit
- 20: terminal
- 210: transmitting unit
- 220: receiving unit
- 230: configuration unit
- 240: control unit
- 1001: processor
- 1002: memory
- 1003: storage
- 1004: communication apparatus
- 1005: input apparatus
- 1006: output apparatus
- 2001: vehicle
- 2002: drive unit
- 2003: steering unit
- 2004: accelerator pedal
- 2005: brake pedal
- 2006: shift lever
- 2007: front wheel
- 2008: rear wheel
- 2009: axle
- 2010: electronic control unit
- 2012: information service unit
- 2013: communication module
- 2021: current sensor
- 2022: revolution sensor
- 2023: pneumatic sensor
- 2024: vehicle speed sensor
- 2025: acceleration sensor
- 2026: brake pedal sensor
- 2027: shift lever sensor
- 2028: object detection sensor
- 2029: accelerator pedal sensor
- 2030: driving support system unit
- 2031: microprocessor
- 2032: memory (ROM, RAM)
- 2033: communication port (IO port)

## Claims

1. A terminal comprising:
a transmitting unit that performs uplink transmission using N (where N is a natural number equal to or less than M) bands selected from among M (where M is a natural number equal to or greater than 3) bands; and
a control unit that, in a case where an instruction for transmission at one port is given and candidates of two or more band combinations are assumed, determines a band combination from among the two or more band combinations on a basis of a specific rule.

2. The terminal according to claim 1, wherein the specific rule is a predefined rule.

3. The terminal according to claim 1, wherein the specific rule is specified on a basis of a parameter reported from a network.

4. The terminal according to claim 1, wherein the specific rule is specified on a basis of capability information reported from the terminal.

5. A base station comprising:
a receiving unit that performs uplink reception using N (where N is a natural number equal to or less than M) bands selected from among M (where M is a natural number equal to or greater than 3) bands; and
a control unit that, in a case where an instruction for transmission at one port is given and candidates of two or more band combinations are assumed, assumes that a terminal determines a band combination from among the two or more band combinations on a basis of a specific rule.

6. A communication method comprising:
a step of performing uplink transmission using N (where N is a natural number equal to or less than M) bands selected from among M (where M is a natural number equal to or greater than 3) bands; and
a step of, in a case where an instruction for transmission at one port is given and candidates of two or more band combinations are assumed, determining a band combination from among the two or more band combinations on a basis of a specific rule.
